# EUROPÄISCHE PATENTSCHRIFT

(11) **EP 4 137 330 B1**
(45) Veröffentlichungstag und Bekanntmachung des Hinweises auf die Patenterteilung: **17.06.2026**
(21) Anmeldenummer: 22190573.0
(22) Anmeldetag: 16.08.2022
(51) Int. Cl.: B65F 1/00, B60B 33/00, B60B 33/02

(54) **LAUFROLLENEINRICHTUNG FÜR MOBILE BEHÄLTER**
CASTOR ASSEMBLY FOR MOBILE CONTAINERS
ENSEMBLE GALET DE ROULEMENT POUR RÉCIPIENTS MOBILES

(30) Priorität: 18.08.2021 DE 202021104420 U
(43) Veröffentlichungstag der Anmeldung: 22.02.2023
(73) Patentinhaber: ESE World B.V., 5674 CB Nuenen (NL)
(72) Erfinder: SCHRÖDER, Kay, 16356 Ahrensfelde/Elisenau (DE); DEN BOER, Reinier Imre Anton, 5658PK Eindhoven (NL)
(74) Vertreter: Müller, Thomas

(56) Entgegenhaltungen:
- EP-A2- 0 141 270
- EP-A2- 0 737 596
- DE-C2- 3 248 508
- DE-U1- 202005 006 433

## Beschreibung

Die vorliegende Erfindung betrifft einem mobilen Behälter gemäß dem Oberbegriff von Patentanspruch 1. Die vorliegende Erfindung ist nicht auf bestimmte Typen mobiler Behälter beschränkt. Beispielsweise kann der mobile Behälter als ein mobiler Abfallsammelbehälter ausgebildet sein.

Mobile Behälter bestehen im Allgemeinen aus einem Behälterkorpus, der zur Aufnahme von Objekten, Stoffen, Substanzen und dergleichen dient. Der Behälterkorpus besteht üblicherweise aus einem Behälterbodenelement und einer davon nach oben abragenden Behälterseitenwand. Behälterbodenelement und Behälterseitenwand begrenzen in der Regel den Aufnahmeraum. Die offene Oberseite des Behälterkorpus, die beispielsweise durch den oberen Rand der Behälterseitenwand gebildet ist, und über die der Aufnahmeraum des Behälterkorpus befüllt wird, wird vorzugsweise mittels einer Deckeleinrichtung verschlossen. Dazu ist die Deckeleinrichtung in geeigneter Weise an dem Behälterkorpus angelenkt. Damit die mobilen Behälter bequem hin und her verfahren werden können, beispielsweise zwischen ihrem üblichen Standort, den man auch als Befüllungsstandort bezeichnen kann, und dem Ort, wo die mobilen Behälter entleert werden, den man auch als Entleerungsstandort bezeichnen kann, ebenso wie zur besseren Handhabbarkeit der mobilen Behälter an sich sind an deren Bodenelement bevorzugt Laufrollen, beispielsweise vier Laufrollen, angeordnet. Eine oder mehrere, vorzugsweise zwei Laufrollen können dabei als so genannte Lenkrollen ausgebildet sein. Das bedeutet insbesondere, dass diese Laufrollen um eine senkrechte Drehachse drehbar gelagert sind, so dass sich die Ausrichtung der Laufrollen ändern kann und die Laufrollen somit eine Lenkbewegung ausführen können. Zumindest einzelne Laufrolleneinrichtungen, vorzugsweise zumindest einzelne Lenkrolleneinrichtungen sind bevorzugt zusätzlich mit einer Feststelleinrichtung ausgestattet, damit diese, und damit der gesamte mobile Behälter, in ihrer Rollbewegung und/oder Ausrichtung blockiert werden können, insbesondere um ein unbeabsichtigtes Verrollen des mobilen Behälters zu vermeiden.

Als Ausgangspunkt der vorliegenden Erfindung dient eine Laufrolleneinrichtung, die insbesondere als Lenkrolleneinrichtung ausgebildet sein kann. Die Laufrollenrolleneinrichtung umfasst eine Laufrolle, welche an einer, vorzugsweise um eine senkrechte Achse drehbar gelagerten, Laufrollengabel befestigt ist. Die Laufrollengabel ist, vorzugsweise über eine Befestigungsplatte, am Behälterbodenelement des Behälterkorpus eines mobilen Behälters, beispielsweise eines mobilen Abfallsammelbehälters, befestigt. Die Laufrolleneinrichtung kann bevorzugt derart ausgebildet sein, dass die Laufrolle um 360 Grad um eine senkrechte Achse schwenkbar beziehungsweise drehbar ist. Die Laufrolle ist damit lenkbar. Eine solche Lenkbarkeit ist im Rahmen der Erfindung jedoch nicht zwingend erforderlich, so dass die Erfindung auch bei nicht lenkbaren, das heißt ungelenkten, Laufrolleneinrichtungen verwirklicht werden/sein kann. Die gattungsgemäße Laufrolleneinrichtung ist zudem mit einer Feststelleinrichtung ausgestattet, welche insbesondere mit dem Fuß betätigt wird. Mittels der Feststelleinrichtung ist es möglich, die Drehbewegung, das heißt die Rollbewegung, der Laufrolle zu blockieren und/oder die Drehbewegung, das heißt die Ausrichtung, der Laufrolle um die senkrechte Achse zu blockieren.

Ein Beispiel für eine solche Laufrolleneinrichtung ist in der DE 201 20 479 U1 beschrieben. Bei dieser bekannten Lösung verfügt die Laufrolleneinrichtung über eine drehbar an einer Befestigungsplatte gelagerte Laufrollengabel, in/an der eine Laufrolle drehbar angeordnet und gelagert ist. Die Laufrollengabel ist mittels eines Drehlagerelements um eine senkrechte Achse um 360 Grad drehbar an der Befestigungsplatte angeordnet, so dass es sich bei der Laufrolleneinrichtung um eine so genannte Lenkrolleneinrichtung handelt. Die Laufrolleneinrichtung verfügt zudem über eine Feststelleinrichtung, mittels derer die Rollbewegung der Laufrolle blockiert werden kann. Die Feststelleinrichtung verfügt dazu über ein Betätigungshebelelement in Form eines Fußbetätigungshebels, beispielsweise ein Bremspedal, das mit einer Druckplatte zusammenwirkt, an deren Ende sich eine Stopkralle befindet. Bei Betätigung des Betätigungshebelelements wird die Druckplatte mit der Stopkralle auf die Laufrolle gedrückt, Dadurch wird die Laufrolle in ihrer Rollbewegung blockiert. Die Feststelleinrichtung befindet sich an der Laufrollengabel und ist somit ebenfalls und in gleicher Weise wie die Laufrolle selbst drehbar. Bei dieser bekannten Lösung kann das Problem auftreten, dass die Feststelleinrichtung, insbesondere deren Betätigungshebelelement, unter das Behälterbodenelement gelangen kann, so dass das Betätigungshebelelement mit dem Fuß nicht mehr erreichbar ist. Ebenso kann sich das Betätigungshebelelement beim Versuch des Bedieners, den Behälter zu bewegen, unter den Behälter bewegen und somit von den Füßen des Bedieners nicht mehr erreicht werden. Die Feststelleinrichtung ist unterhalb des Behälters nur schwierig zu bedienen, was zudem auch zu einer Beschädigung des Schuhwerks der die Feststelleinrichtung bedienenden Person führen kann. Wenn die Feststelleinrichtung bereits aktiviert war, bleibt diese also aktiviert und der Bediener muss sich anstrengen - möglicherweise sogar gegen die Laufrolleneinrichtung treten, um das Betätigungshebelelement in eine Position zu bringen, in der die Feststelleinrichtung entriegelt oder deaktiviert werden kann.

Um bezüglich der vorgenannten Probleme Abhilfe zu schaffen, sind bereits auch Laufrolleneinrichtungen bekannt geworden, bei denen das Betätigungshebelelement selbst nicht drehbar ist. Eine solche Lösung ist beispielsweise in der DE 94 17 054 U1 beschrieben. Die Laufrolle an sich ist wiederum an einer um eine senkrechte Achse drehbar gelagerten Laufrollengabel befestigt und somit lenkbar. Die drehbare Laufrollengabel ist über eine Befestigungsplatte am Behälterbodenelement des Behälterkorpus eines mobilen Behälters, beispielsweise eines mobilen Abfallsammelbehälters, befestigt. Die Laufrolle ist um 360 Grad um eine senkrechte Achse schwenkbar und ist mit einer individuellen Feststelleinrichtung ausgestattet, welche mit dem Fuß betätigt wird. Die Feststelleinrichtung ist jedoch nicht mehr an der drehbaren Laufrollengabel, sondern stattdessen an der nicht drehbaren Befestigungsplatte angeordnet. Die Feststelleinrichtung weist ein Betätigungshebelelement auf, das mit dem Fuß bedient wird. Durch Betätigung des Betätigungshebelelements wird ein durch einen Achsbereich der Laufrollengabel hindurchtretender Stößel senkrecht nach unten in Richtung der Laufrolle bewegt. Am Ende des Stößels befindet sich ein Blockierelement, welches mit der Laufrolle zusammenwirkt, indem es eine Rollbewegung der Laufrolle verhindert, wenn das Blockierelement aufgrund der Abwärtsbewegung des Stößels gegen die Laufrolle gedrückt wird. Mit dieser Lösung kann bei entsprechender Anordnung der Laufrolleneinrichtung zwar verhindert werden, dass das Betätigungshebelelement unter den Behälterboden gelangen kann. Allerdings steht das Betätigungshebelelement, das ebenfalls mit dem Fuß bedient wird, im Bereich des Behälterbodens über die seitliche Begrenzung des Behälterkorpus horizontal nach außen vor. Das hat eine Reihe von Nachteilen. Im Betrieb kann das Betätigungshebelelement gegen Hindernisse, wie Bordsteinkanten oder dergleichen, stoßen und dabei beschädigt, beispielsweise verbogen werden. Zudem besteht für die Nutzer eine Verletzungsgefahr im öffentlichen Raum. Beispielsweise ist es üblich, dass derartige mobile Behälter, beispielsweise mobile Abfallsammelbehälter, vom Behälterhersteller zu dessen Kunden, und von diesen an die jeweiligen Einsatzorte transportiert werden. Dazu werden jeweils mehrere Behälter ineinander gestapelt, um gleichzeitig möglichst viele Behälter transportieren zu können. Durch die über die Seiten des Behälterkorpus hinausragenden Betätigungshebelelemente ist die Behälterstapelung zur Auslieferung jedoch gar nicht, zumindest aber nur eingeschränkt möglich.

Eine weitere Lösung für eine Laufrolleneinrichtung ist in der DE 20 2005 006 433 U1 beschrieben.

Bei den vorgenannten Laufrolleneinrichtungen verfügt jede Laufrolle jeweils über eine eigene, dieser Laufrolle zugeordnete Feststelleinrichtung. Man kann diesen Typ von Laufrolleneinrichtung deshalb auch als Individualstop-Lösung bezeichnen. Verfügt der mobile Behälter über mehrere dieser Laufrolleneinrichtungen, wird zur Festlegung jeder einzelnen Laufrolle jede Feststelleinrichtung individuell und separat von den anderen Feststelleinrichtungen betätigt.

Weiterhin bekannt sind im Stand der Technik auch so genannte Zentralstop-Lösungen. Hierbei werden zwei, vorzugsweise als Lenkrolleneinrichtungen ausgebildete drehbar gelagerte Laufrolleneinrichtungen über eine gemeinsame zentrale Feststelleinrichtung gebremst und gegebenenfalls blockiert. Die zentrale Feststelleinrichtung wirkt somit gleichzeitig mit beiden Laufrolleneinrichtungen zusammen. Dazu sind die beiden Laufrollen, beziehungsweise entsprechende Blockiervorrichtungen der Feststelleinrichtungen, die jeweils mit den Laufrollen zusammenwirken, über ein einziges, gemeinsames Betätigungsprofilelement, beispielsweise eine Betätigungsstange, miteinander gekoppelt. Über die Betätigung des Betätigungsprofilelements, beispielsweise mittels eines Betätigungshebelelements, etwa eines Fußpedals, werden bei Bedarf die mit den Laufrollen zusammenwirkenden Blockiervorrichtungen, die beispielsweise geeignete Blockierelemente aufweisen, aktiviert, wodurch die Drehung beziehungsweise Rollbewegung der Laufrollen unterbunden wird.

Eine solche Zentralstop-Lösung ist in der DE 36 33 945 A1 beschrieben. Darin ist ein Abfallsammelbehälter in Form eines Müll-Großbehälters mit einer zentralen Feststelleinrichtung für jeweils zwei als Lenkrollen ausgebildete Laufrollen beschrieben. Die Feststelleinrichtung weist zwei Blockiervorrichtungen auf, wobei jeweils eine Blockiervorrichtung einer Laufrolle zugeordnet ist. Die Blockiervorrichtungen der beiden Laufrollen sind über ein einzelnes gemeinsames Betätigungsprofilelement in Form einer horizontalen Betätigungsstange gekoppelt, wobei die Betätigungsstange mittels eines im Bodenbereich des Behälters bereitgestellten Betätigungshebelelements in Form eines Pedals bedient wird. Fixiert wird das Pedal in seiner Bremsstellung mittels einer Riegelstange und eines Schlosses, die außen am Behälterkorpus, angeordnet sind. Diese beiden Komponenten sind zusätzlich von einem Prallkörper-Profil umgeben, welches außen in einer Eckzone zwischen Längs- und Querwand des Behälterkorpus vorgesehen ist. Durch das vom Behälterkorpus nach außen abragende, und damit über die Begrenzung des Behälters nach außen hinausragende, Gestänge und Schloss sowie das Prallkörper-Profil ist die Behälterstapelung zur Auslieferung jedoch nur eingeschränkt möglich. Da die Betätigung der Blockiervorrichtungen mittels eines Pedals erfolgt, über welches mittels der gemeinsamen Betätigungsstange beide Feststelleinrichtungen gleichzeitig betätigt werden, muss das Pedal ausreichend groß dimensioniert sein, insbesondere hinsichtlich dessen Länge, damit die aufzubringende Kraft, die über die Betätigungsstange auf beide relativ weit voneinander entfernten Blockiervorrichtungen übertragen werden muss, wegen der Hebelgesetzmäßigkeiten in überschaubarer Größe gehalten werden kann. Hinsichtlich einer guten Stapelbarkeit der Behälter sind große Pedale, die relativ weit über die Begrenzung des Behälterkorpus hinausstehen, von Nachteil. Auch können weit vorstehende, beziehungsweise weit über die Begrenzung des Behälterkorpus nach außen hinausragende, Pedale, die sich oft in der Höhe des Behälterbodenelements befinden, leicht gegen Bordsteinkanten oder andere Hindernisse anschlagen, was zu einer Beschädigung der Feststelleinrichtung führen kann, beispielsweis durch Verbiegen. Zudem besteht auch hier wieder eine Verletzungsgefahr für die Nutzer im öffentlichen Raum.

Eine andere Zentralstop-Lösung ist in der DE 32 22 979 A1 offenbart. Die Festlegung der beiden Laufrollen beziehungsweise die Aktivierung der Blockiervorrichtungen erfolgt auch hier über eine gemeinsame Feststelleinrichtung, welche ein außen an der Behälterseitenwand des Behälterkorpus hochgezogenes Gestänge mit Absperrschloss aufweist. Eine hierzu ähnliche Lösung ist auch in der DE G 93 01 514.3 U beschrieben. Durch das über die Begrenzung des Behälterkorpus nach außen abragende Gestänge ist die Behälterstapelung zur Auslieferung jedoch nur eingeschränkt möglich.

Eine weitere Zentralstop-Lösung ist in der DE 32 48 508 C2 beschrieben. Zwei als Lenkrollen ausgebildete drehbar gelagerte Laufrollen werden über eine gemeinsame zentrale Feststelleinrichtung gebremst. Dazu weist die Feststelleinrichtung zwei Blockiervorrichtungen auf, wobei jeweils eine Blockiervorrichtung einer Laufrolle zugeordnet ist. Die beiden Laufrollen, beziehungsweise entsprechende Blockiervorrichtungen der Feststelleinrichtung, die jeweils mit den Laufrollen zusammenwirken, sind über ein einziges, gemeinsames Betätigungsprofilelement, beispielsweise eine Betätigungsstange, miteinander gekoppelt. Über die Betätigung des Betätigungsprofilelements werden bei Bedarf die mit den Laufrollen zusammenwirkenden Blockiervorrichtungen, beispielsweise Blockierelemente der Blockiervorrichtungen, aktiviert, wodurch die Drehung beziehungsweise Rollbewegung der Laufrollen unterbunden wird. Dazu wird ein in der Blockiervorrichtung geführter Stößel, an dessen freiem Ende sich ein Blockierelement befindet, senkrecht von oben in Richtung der Laufrolle bewegt, wodurch das Blockierelement von oben auf die Laufrolle drückt wird und deren weitere Drehung beziehungsweise Rollbewegung blockiert. Jede Blockiervorrichtung wird über eine Exzentereinrichtung betätigt, die fest mit dem Betätigungsprofilelement verbunden ist. Durch das über die Begrenzung des Behälterkorpus nach außen abragende Gestänge ist die Behälterstapelung zur Auslieferung auch hier nur eingeschränkt möglich, und es besteht im Betrieb des Behälters, der üblicherweise im öffentlichen Raum stattfindet, eine Verletzungsgefahr für die Nutzer.

Weitere Beispiele für Zentralstop-Lösungen sind in der EP 0 737 596 A2 oder der EP 0 141 270 A2 beschrieben.

Bei allen genannten Zentralstop-Lösungen tritt zudem ein weiterer Nachteil auf. Damit die Blockierelemente der Blockiervorrichtungen nach einer Entriegelung von einer Verriegelungsposition in eine Entriegelungsposition zurückkehren können, weisen die Blockiervorrichtungen jeweils ein Federelement auf, welches den Stößel nach der Entriegelung wieder nach oben drückt, beziehungsweise zieht. Wenn das Betätigungsprofilelement zum Verriegeln gedreht wird, beispielsweise indem das Betätigungshebelelement nach unten gedrückt wird, bewegt sich der Stößel senkrecht nach unten, wodurch ein am Ende des Stößels vorgesehenes Blockierelement, beispielsweise ein Bremsklotz, gegen die Laufrolle gedrückt wird, um die Rollbewegung der Laufrolle zu blockieren. Dabei wird das Federelement zusammengedrückt und erzeugt eine Gegenkraft, die den Stößel in dessen Ausgangslage, das heißt Entriegelungsposition, zurückdrücken beziehungsweise zurückziehen will. Würde man das Betätigungshebelelement in der Verriegelungsposition also loslassen, würden der Stößel und damit auch das Betätigungshebelelement aufgrund der im Federelement erzeugten Rückstellkräfte automatisch in die Ausgangsposition, das heißt in die Entriegelungsposition, zurückgeführt. Man benötigt deshalb das weiter oben beschriebene Gestänge und die Schließvorrichtung, um das Blockierelement und auch das Betätigungshebelelement in der Verriegelungsposition zu halten. Die Feststelleinrichtungen beruhen somit auf einer permanent, gegen den Blockierweg beziehungsweise Bremsweg wirkenden Federkraft innerhalb der Blockiervorrichtung. Nach Aktivierung der Blockierung verharrt die Laufrolle nicht selbststätig im gebremsten Zustand. Die Rollbewegung der Laufrolle muss mit Aktivierung der Blockiervorrichtung blockiert beziehungsweise verriegelt werden, was nur durch die weiter oben beschriebenen Anbauteile an der Seitenwand des Behälterkorpus möglich ist, was wiederum zu den oben genannten Nachteilen führt. Derartige Zentralstop-Lösungen sind deshalb auch konstruktiv aufwändig und zudem verschleiß- und beschädigungsanfällig. Zudem führen sie zu den weiter oben geschilderten Stapelproblemen.

Ausgehend vom genannten Stand der Technik liegt der vorliegenden Erfindung die Aufgabe zugrunde, einen mobilen Behälter mit einer konstruktiv einfachen Laufrolleneinrichtung mit Feststelleinrichtung bereitzustellen, die zum einen bedienfreundlich und verschleißarm ist, die die Verletzungsgefahr mindert, und die gleichzeitig eine gute Stapelbarkeit von mobilen Behältern gestattet, welche mit entsprechenden Laufrolleneinrichtungen ausgestattet sind. Die Minimierung der Verletzungsgefahr ist ein nicht zu unterschätzender Aspekt, da die mobilen Behälter, insbesondere wenn es sich um Abfallsammelbehälter handelt, häufig im öffentlichen Raum aufgestellt werden, und entsprechende Verletzungen, die sich Nutzer und Bedienpersonal zuziehen können, entsprechende Haftungsfolgen nach sich ziehen können. Weiterhin soll ein weitergebildetes Fahrwerk für mobile Behälter bereitgestellt werden, sowie ein weitergebildeter mobiler Behälter.

Diese Aufgabe wird erfindungsgemäß gelöst durch den mobilen Behälter mit den Merkmalen gemäß dem unabhängigen Patentanspruch 1. Weitere Merkmale und Details der Erfindung ergeben sich aus den Unteransprüchen, aus der Beschreibung sowie aus den Zeichnungen.

Die vorliegende Erfindung ist im Bereich der mobilen Behälter angesiedelt, jedoch nicht auf bestimmte Typen mobiler Behälter beschränkt. Im Folgenden wird die Erfindung zur Erläuterung der erfindungsgemäßen Zusammenhänge des Öfteren anhand eines bevorzugten Ausführungsbeispiels beschrieben, bei dem der mobile Behälter als ein mobiler Abfallsammelbehälter ausgebildet ist. Bei einem solchen Abfallsammelbehälter kann es sich insbesondere um einen Müll-Großbehälter handeln, der beispielsweise ein Füllvolumen von bis zu 1.100 Litern oder sogar mehr als 1.100 Litern aufweisen kann, beispielsweise ein Füllvolumen von 400 Litern oder mehr. Selbstverständlich ist die Erfindung nicht auf diese konkreten Ausführungsbeispiele beschränkt, so dass auch andere Typen und Größen von mobilen Behältern mit anderen Einsatz- und Verwendungszwecken von der vorliegenden Erfindung mit umfasst sind.

Mobile Behälter bestehen vorzugsweise aus einem Behälterkorpus, der zur Aufnahme von Objekten, Stoffen, Substanzen und dergleichen dient. Beispielsweise kann es sich dabei um einen Abfallbehälterkorpus handeln, der zur Aufnahme von Abfall, Wertstoffen und dergleichen dient. Der Behälterkorpus wird durch eine Behälterseitenwand und ein Behälterbodenelement begrenzt, welche den Aufnahmeraum begrenzen. Nach oben ist der Behälterkorpus offen, zumindest bereichsweise offen, wodurch sich eine Einfüllöffnung ergibt. Die offene Oberseite des Behälterkorpus, über die dieser befüllt wird, wird vorzugsweise mittels einer Deckeleinrichtung verschlossen. Dazu ist die Deckeleinrichtung in geeigneter Weise an dem Behälterkorpus angelenkt.

Die Anzahl derartiger Abfallsammelbehälter, beispielsweise von Müll-Großbehältern, insbesondere im kommunalen und öffentlichen Bereich, ist in den letzten Jahren stark gestiegen. Es gibt mehrere Varianten, beispielsweise Abfallsammelbehälter mit Schiebe- oder Runddeckeln, und solche mit Flachdeckeln. Bei Letzteren kann es sich beispielsweise um Schwingdeckel handeln, die in der Regel seitlich am Abfallbehälterkorpus angelenkt sind. Beispielsweise kann es sich bei den Flachdeckeln um Klappdeckel handeln, die, insbesondere über Scharniere, an einer der oberen Kanten des Abfallbehälterkorpus, insbesondere an der oberen Hinterkante, angelenkt sind. Derartige Abfallsammelbehälter bestehen in der Regel aus robusten Materialien, wie beispielsweise Metall oder harten Kunststoffen. Diese Art von Abfallsammelbehältem wird üblicherweise in Abfallsammelfahrzeuge entleert. Dazu verfügen die Abfallsammelfahrzeuge über eine Schüttung mit Lifteinrichtung. Mittels der Lifteinrichtung werden die Abfallsammelbehälter gegriffen, angehoben und in einen Aufnahmebereich des Abfallsammelfahrzeugs gekippt. Dabei öffnet sich der Deckel, und der im Abfallbehälterkorpus befindliche Abfall fällt in den Aufnahmebereich des Abfallsammelfahrzeugs. In der Regel verfügen die Abfallsammelfahrzeuge weiterhin über eine Presseinrichtung, die insbesondere eine Pressplattenkonstruktion oder eine Pressschildeinrichtung aufweist. Über die Presseinrichtung wird der in den Aufnahmebereich geschüttete Abfall zusammengepresst und in den Sammelcontainer des Abfallsammelfahrzeugs verschoben.

Damit die mobilen Behälter bequem hin und her verfahren werden können, beispielsweise zwischen ihrem üblichen Standort, den man auch als Befüllungsstandort bezeichnen kann, und dem Ort, wo die mobilen Behälter entleert werden, den man auch als Entleerungsstandort bezeichnen kann, ebenso wie zur besseren Handhabbarkeit der mobilen Behälter an sich weist der mobile Behälter ein Fahrwerk auf. Das Fahrwerk weist bevorzugt eine Anzahl von Laufrolleneinrichtungen auf, beispielsweise drei oder vier Laufrolleneinrichtungen, die bevorzugt an dem Behälterbodenelement des Behälterkorpus angeordnet sind. Eine oder mehrere, vorzugsweise zwei Laufrolleneinrichtungen können dabei als so genannte Lenkrolleneinrichtungen ausgebildet sein. Das bedeutet, dass die Ausrichtung der Laufrollen um eine senkrechte Achse verändert, insbesondere verdreht werden kann, wie dies im allgemeinen Teil der Beschreibungseinleitung erläutert ist, auf die an dieser Stelle zur Vermeidung von Wiederholungen verwiesen und vollinhaltlich Bezug genommen wird. Zumindest einzelne Laufrolleneinrichtungen, vorzugsweise zumindest einzelne Lenkrolleneinrichtungen, sind bevorzugt zusätzlich mit einer Feststelleinrichtung ausgestattet, damit deren Laufrollen, und damit der gesamte mobile Behälter, in ihrer Bewegung und oder Ausrichtung blockiert werden können, insbesondere um ein unbeabsichtigtes Verrollen des mobilen Behälters zu vermeiden.

Als Ausgangspunkt der vorliegenden Erfindung dient eine Laufrolleneinrichtung, die insbesondere als Lenkrolleneinrichtung ausgebildet sein kann. Die Laufrollenrolleneinrichtung umfasst eine Laufrolle, welche an einer, vorzugsweise um eine senkrechte Achse drehbar gelagerten, Laufrollengabel angeordnet ist. Die Laufrollengabel ist, vorzugsweise über eine Befestigungsplatte, am Behälterbodenelement des Behälterkorpus eines mobilen Behälters, beispielsweise eines mobilen Abfallsammelbehälters, befestigt. Die Laufrolleneinrichtung kann bevorzugt derart ausgebildet sein, dass die Laufrolle um 360 Grad um eine senkrechte Achse schwenkbar beziehungsweise drehbar ist. Die Laufrolle ist damit lenkbar. Eine solche Lenkbarkeit ist im Rahmen der Erfindung jedoch nicht zwingend erforderlich, so dass die Erfindung auch bei nicht lenkbaren, das heißt ungelenkten, Laufrolleneinrichtungen verwirklicht werden/sein kann. Die erfindungsgemäße Laufrolleneinrichtung ist zudem mit einer Feststelleinrichtung ausgestattet, welche insbesondere mit dem Fuß betätigt wird. Mittels der Feststelleinrichtung ist es möglich, die Drehbewegung, das heißt die Rollbewegung, der Laufrolle zu blockieren und/oder die Schwenkbewegung, das heißt die Ausrichtung, der Laufrolle um die senkrechte Achse zu blockieren.

In einer bevorzugten Ausführungsform weist ein mobiler Behälter zwei Laufrolleneinrichtungen mit Feststelleinrichtung auf, welche bevorzugt als Lenkrolleneinrichtungen ausgebildet sind. Die Laufrolleneinrichtungen sind insbesondere entweder an beziehungsweise unterhalb der Behälterseitenwand, beispielsweise an Frontseite und/oder der Rückseite des Behälterkorpus angeordnet, können natürlich aber auch, falls erforderlich, an beziehungsweise unterhalb wenigstens einer der Seitenwände des Behälterkorpus vorgesehen sein. Vorzugsweise sind die Laufrolleneinrichtungen an dem Behälterbodenelement des Behälterkorpus angeordnet, vorzugsweise im Bereich einer entsprechenden Radkonsole, und zwar derart, dass sie im Bereich der Seitenwand, etwa der Frontseite und/oder Rückseite, quasi in Verlängerung der Behälterseitenwand, am Rand des Behälterbodenelements angeordnet sind. Dieser genannte Rand stellt insbesondere den Übergangsbereich zwischen Behälterbodenelement und Seitenwand dar, oder liegt unmittelbar vor diesem Übergangsbereich.

Hinsichtlich der Laufrolleneinrichtung basiert die vorliegende Erfindung auf einer wie weiter oben beschriebenen Individualstop-Lösung. Das bedeutet, dass jede Laufrolleneinrichtung mit Feststelleinrichtung, die an einem mobilen Behälter zum Einsatz kommt, ihre eigene individuelle Feststelleinrichtung aufweist, und dass jede Feststelleinrichtung einzeln und unabhängig von den anderen Feststelleinrichtungen betätigt wird. Zwischen den einzelnen Laufrolleneinrichtungen, insbesondere den einzelnen Feststelleinrichtungen besteht somit keinerlei Kontakt. Bei den Laufrolleneinrichtungen mit den dazugehörigen Feststelleinrichtungen handelt es somit um individuelle, von den anderen Laufrolleneinrichtungen unabhängige Laufrolleneinrichtungen.

Die Laufrolleneinrichtung weist zunächst eine Laufrollengabel auf, an welcher eine Laufrolle angeordnet ist. Eine Gabel weist grundsätzlich zwei von einer Basis abragende Schenkelelemente auf, wobei die Laufrolle drehbar zwischen den beiden Schenkeln angeordnet ist. Unter dem Begriff Gabel ist dabei aber auch eine solche Ausgestaltung subsumiert, bei der nur ein Schenkel vorgesehen ist, an welchem die Laufrolle drehbar angeordnet ist.

Weiterhin weist die Laufrolleneinrichtung eine Befestigungseinrichtung auf, über die die Laufrolleneinrichtung an einem mobilen Behälter, insbesondere von außen an dem Behälterbodenelement des Behälterkorpus eines mobilen Behälters angeordnet wird, beispielsweise mittels Schraubverbindungen oder dergleichen. Bei der Befestigungseinrichtung handelt es sich vorzugsweise um eine Befestigungsplatte, einen Befestigungsrahmen, ein Befestigungsprofil, oder dergleichen. In einer Ausführungsform ist die Befestigungseinrichtung ein eigenständiges Bauteil, an dem die Laufrollengabel, insbesondere drehbar, angeordnet ist/wird. In einer anderen Ausführungsform ist die Befestigungseinrichtung als ein Teil der Laufrollengabel ausgebildet. In jedem Fall ist die Befestigungseinrichtung derart bereitgestellt, dass sie in der Lage ist, an einem mobilen Behälter befestigt zu werden.

Die Laufrolleneinrichtung weist eine Feststelleinrichtung auf, die in besonderer Weise ausgebildet ist, und die derart bereitgestellt ist, dass sie in der Lage ist, bei Aktivierung die Rollbewegung der Laufrolle und/der die Ausrichtung der Lauftolle zu blockieren. Erfindungsgemäß weist die Feststelleinrichtung die folgenden Merkmale auf:
Zunächst weist die Feststelleinrichtung eine Blockiervorrichtung auf, welche ein bewegliches Blockierelement und eine Wandlereinrichtung zum Umwandeln einer Drehbewegung in eine translatorische Bewegung aufweist. Das Blockierelement hat die Funktion, bei Betätigung der Blockiervorrichtung, vorzugsweise von oben, auf die Laufrolle zu drücken. Bevorzugte Ausführungsbeispiele hierzu werden im weiteren Verlauf der Beschreibung erläutert. Ebenso werden Ausführungsbeispiele für die Wandlereinrichtung sowie zu deren Funktionsweise im weiteren Verlauf der Beschreibung näher erläutert. Die Blockiervorrichtung ist in der Laufrolleneinrichtung bevorzugt derart angeordnet oder ausgebildet, dass sie von der Laufrollengabel entkoppelt ist. Sollte es sich bei der Laufrolleneinrichtung um eine Lenkrolleneinrichtung handeln, bei der insbesondere die Laufrollengabel um eine senkrechte Achse drehbar gelagert ist, wird eine Drehung der Laufrollengabel nicht auf die Blockiervorrichtung übertragen. Bevorzugt ist vorgesehen, dass die Blockiervorrichtung in ihrer Ausrichtung unveränderlich an der Laufrolleneinrichtung angeordnet ist.

Der Blockiervorrichtung ist ein längliches Betätigungsprofilelement individuell zugeordnet. "Individuell" bedeutet dabei insbesondere, dass das Betätigungsprofilelement nur einer und dann allein dieser Blockiervorrichtung, das heißt exklusiv dieser Blockiervorrichtung, zugeordnet ist. "Zugeordnet" bedeutet dabei insbesondere, dass das Betätigungsprofilelement mit der Blockiervorrichtung zusammenwirkt, beziehungsweise zusammenarbeitet. Vorzugsweise wird die Blockiervorrichtung über das Betätigungsprofilelement betätigt, beispielsweise das Blockierelement der Blockiervorrichtung. Damit unterscheidet sich die erfindungsgemäße Laufrolleneinrichtung von den aus dem Stand der Technik bekannten Zentralstop-Lösungen, bei denen immer zwei Feststelleinrichtungen von zwei unterschiedlichen Laufrolleneinrichtungen über ein einziges gemeinsames Betätigungsprofilelement miteinander gekoppelt sind. Wenn beispielsweise zwei erfindungsgemäße Laufrolleneinrichtungen zum Einsatz kommen, wie dies im Zusammenhang mit dem zweiten Erfindungsaspekt weiter unten beschrieben ist, gibt es immer auch zwei voneinander unabhängige Betätigungsprofilelemente, die miteinander nicht in Verbindung stehen. Ein längliches Betätigungsprofilelement ist insbesondere ein solches, dessen Erstreckung in Längsrichtung größer, insbesondere um ein Vielfaches größer ist als dessen Erstreckung in Breitenrichtung oder Querschnittrichtung.

Die vorliegende Erfindung ist nicht auf bestimmte Ausgestaltungen für das Betätigungsprofilelement beschränkt. Grundsätzlich kann jede Form eines Längsprofilelements zum Einsatz kommen. Beispielsweise kann es sich um eine Stange handeln. In einer bevorzugten Ausführungsform ist das Betätigungsprofilelement als ein Mehrkant-Profilelement, beispielsweise ein Vierkant-Profilelement oder Sechskant-Profilelement, ausgebildet.

Erfindungsgemäß ist das Betätigungsprofilelement horizontal, das heißt waagerecht ausgerichtet, beispielsweise parallel zur Ausrichtung der Befestigungseinrichtung, oder der Fläche des Behälterbodenelements eines mobilen Behälters, an dem die Laufrolleneinrichtung angeordnet wird/ist, oder zum Untergrund, auf dem sich der mobile Behälter befindet, oder senkrecht zur Ausrichtung der Laufrollengabel.

Weiterhin ist das Betätigungsprofilelement drehbar an der Laufrolleneinrichtung, insbesondere an der Blockiervorrichtung und/oder an der Befestigungseinrichtung, gelagert. Die drehbare Lagerung erfolgt dabei insbesondere um die Längsachse des Betätigungsprofilelements.

Darüber hinaus erstreckt sich das Betätigungsprofilelement in seiner Längserstreckung über die Befestigungseinrichtung hinaus. Das bedeutet, dass das Betätigungsprofilelement über die Befestigungseinrichtung, das heißt über den Rand beziehungsweise die Begrenzung der Befestigungseinrichtung, übersteht und über diese hinausragt.

Bevorzugt ist vorgesehen, dass die Länge des Betätigungsprofilelements kleiner 30 cm ist, vorzugsweise kleiner 20 cm ist, bevorzugt kleiner oder gleich 15 cm, beispielsweise kleiner oder gleich 10 cm, ist.

Das Betätigungsprofilelement weist zwei Endbereiche auf. In einem ersten Endbereich wirkt das Betätigungsprofilelement mit der Wandlereinrichtung zusammen und ist beispielsweise mit dieser verbunden. In seinem zweiten Endbereich, der dem ersten Endbereich gegenüberliegt, weist das Betätigungsprofilelement ein Betätigungshebelelement auf, beispielsweise ein Fußpedal. In einer Ausführungsform ist das Betätigungshebelelement ein eigenständiges Bauteil, welches im zweiten Endbereich, beispielsweise am zweiten Ende, des Betätigungsprofilelements mit diesem verbunden ist. In einer anderen Ausführungsform ist der zweite Endbereich des Betätigungsprofilelements als ein solches Betätigungshebelelement ausgebildet. Über eine Betätigung des Betätigungselements kann das Betätigungsprofilelement beispielsweise um seine Längsachse gedreht werden, wie nachfolgend in größerem Detail beschrieben wird. Erfindungsgemäß ist das Betätigungshebelelement über das Betätigungsprofilelement an der Laufrolleneinrichtung, insbesondere an der Blockiervorrichtung, zwischen einer ersten Position, die eine Entriegelungsposition ist, und einer dazu verschiedenen zweiten Position, die eine Verriegelungsposition ist, drehbar gelagert. Das Betätigungsprofilelement ist in einer Ausführungsform weder direkt mit der Laufrollengabel noch mit der Befestigungseinrichtung verbunden. In einer anderen Ausführungsform kann das Betätigungsprofilelement, insbesondere zur Abstützung, mit der Laufrollengabel oder der Befestigungseinrichtung verbunden sein.

Erfindungsgemäß ist die weiter oben bereits allgemein eingeführte Wandlereinrichtung zum Umwandeln der Drehbewegung des Betätigungsprofilelements in eine translatorische Bewegung des Blockierelements der Blockiervorrichtung ausgebildet. Bevorzugte Ausführungsbeispiele für derartige Wandlereinrichtungen werden im weiteren Verlauf der Beschreibung näher erläutert.

In einer bevorzugten Ausführungsform ist die Laufrolleneinrichtung als Lenkrolleneinrichtung ausgebildet. Dazu ist die Laufrollengabel insbesondere um eine senkrechte Achse drehbar, insbesondere über ein Drehlagerelement, an der Befestigungseinrichtung angeordnet. Derartige Drehlagerelemente sind dem Fachmann geläufig, beispielsweise in Form von Kugellagern oder dergleichen.

Um den Verschleiß einzelner Komponenten der Blockiervorrichtung, beispielsweise entsprechender Federelemente zu reduzieren, und um gleichzeitig eine gute Stapelbarkeit von mobilen Behältern, die mit solchen Laufrolleneinrichtungen mit Feststelleinrichtung ausgestattet sind, zu gewährleisten, ist die Wandlereinrichtung in einer bevorzugten Ausführungsform derart bereitgestellt ist, dass das Betätigungshebelelement in der zweiten Verriegelungsposition keine Gegenkräfte erfährt, das heißt, dass keine Gegenkräfte auf das Betätigungshebelelement wirken. Nach Betätigung des Betätigungshebelelements und dadurch des Betätigungsprofileelements, und hierüber des Blockierelements der Blockiervorrichtung, verharrt das Blockierelement und damit die Laufrolle selbsttätig im gebremsten Zustand, es ist kein zusätzliches Verriegelungssystem notwendig. Dies wird anhand eines konkreten, bevorzugten Ausführungsbeispiels weiter unten näher erläutert. Auf die im Stand der Technik bislang erforderlichen Anbauteile, bestehend aus Gestänge mit Schloss, welche außen am Behälterkorpus, insbesondere auch außen an der Behälterseitenwand angeordnet werden mussten, kann nunmehr verzichtet werden. In ähnlicher Weise ist bevorzugt auch vorgesehen, dass die Wandlereinrichtung derart bereitgestellt ist, dass das Betätigungshebelelement in der ersten Entriegelungsposition keine Gegenkräfte erfährt.

Um eine gute Stapelbarkeit der mobilen Behälter mit erfindungsgemäßen Laufrolleneinrichtungen mit Feststelleinrichtung zu gewährleisten, um Beschädigungen der Feststelleirichtungen aufgrund des Anstoßens an Borsteinkanten zu vermeiden, und um die Verletzungsgefahr zu mindern, wie dies in der Beschreibungseinleitung weiter oben angesprochen wurde, ist es von Vorteil, wenn das Betätigungshebelelement so klein wie möglich ausgestaltet ist. Durch die Ausgestaltung des Befestigungsprofilelements, wonach das Betätigungshebelelement von der Blockiervorrichtung und der Laufrollengabel zwar räumlich beabstandet ist, sich gleichzeitig aber noch in größtmöglicher Nähe dazu befindet, ist es möglich, das Befestigungshebelelement flächenmäßig klein zu halten. In einer bevorzugten Ausführungsform weist das Betätigungshebelelement eine maximale Länge von kleiner oder gleich 15 cm, bevorzugt kleiner oder gleich 10 cm, besonders bevorzugt von kleiner oder gleich 7.5 cm auf. Alternativ oder zusätzlich kann das Betätigungshebelelement eine maximale Breite von kleiner oder gleich 7 cm, bevorzugt kleiner oder gleich 5 cm aufweisen. Es ist selbstverständlich, dass die Erfindung nicht auf die vorgenannten Längenangaben und Breitenangaben beschränkt ist.

Um insbesondere eine gute Stapelbarkeit der mit entsprechenden Laufrolleinrichtungen ausgestatteten mobilen Behältern zu erreichen, ist weiterhin bevorzugt vorgesehen, dass das Betätigungshebelelement in der ersten Entriegelungsposition in einem definierten Winkel mit einem aus der Horizontalen schräg nach unten abragenden Verlauf an dem Betätigungsprofilelement angeordnet oder ausgebildet ist. Damit steht das Betätigungshebelelements zum einen nur geringfügig über den Behälterkorpus nach außen vor, insbesondere, wenn das Betätigungshebelelement auch die weiter oben genannten Längenwerte und Breitenwerte hat. Zudem ist für den Bediener nur ein geringer Kraftaufwand erforderlich, um das Betätigungshebelelement zu bedienen. Verzugsweise beträgt der genannte Winkel mehr als 20 Grad. Bevorzugt liegt er in einem Bereich zwischen 30 und 45 Grad, wobei die Erfindung nicht auf diese konkreten Winkelangaben beschränkt ist. In ähnlicher Weise kann das Betätigungshebelelement auch in der zweiten Verriegelungsposition in einem definierten Winkel mit einem aus der Horizontalen schräg nach unten abragenden Verlauf an dem Betätigungsprofilelement angeordnet oder ausgebildet sein, wobei der Winkel vorzugsweise mehr als 50 Grad beträgt, bevorzugt in einem Bereich zwischen 60 und 90 Grad liegt. Auch hier ist die Erfindung nicht auf diese konkreten Winkelangaben beschränkt. In analoger Weise könnte das Betätigungshebelelement auch in einem definierten Winkel mit einem aus der Horizontalen schräg nach oben abragenden Verlauf an dem Betätigungsprofilelement angeordnet oder ausgebildet sein.

In einer bevorzugten Ausführungsform ist das Blockierelement gleitbeweglich an oder in der Blockiervorrichtung angeordnet. Die Gleitstrecke liegt bevorzugt im Bereich zwischen 5 bis 8 mm, wobei die Erfindung nicht auf diese konkreten Angaben beschränkt ist.

In einer bevorzugten Ausführungsform weist die Blockiervorrichtung einen in der Blockiervorrichtung beweglich geführten Stößel auf, wobei das Blockierelement an einem ersten freien Ende des Stößels angeordnet oder ausgebildet ist. An einem zweiten Ende, welches dem ersten Ende gegenüberliegt, kann der Stößel gegebenenfalls mit einem Federelement zusammenwirken. Das Federelement unterstützt das Blockierelement dabei, in seine ursprüngliche Position zurückzukehren, wenn die Feststelleinrichtung aus dem Verriegelungszustand in den Entriegelungszustand überführt wird, so wie dies im Zusammenhang mit dem Stand der Technik weiter oben bereits grundsätzlich erläutert wurde.

Nachfolgend werden nun bevorzugte Ausführungsformen für die Wandlereinrichtung beschrieben, ohne dass die Erfindung auf diese konkreten Beispiele beschränkt wäre. Vorzugsweise weist die Wandlereinrichtung ein Exzenterelement oder ein unrundes Element auf, oder ist als ein solches ausgebildet. Insbesondere ist die auf diese Weise ausgebildete Wandlereinrichtung von dem Betätigungsprofilelement durchsetzt, und vorzugsweise positionsfixiert an diesem angeordnet. Damit ist die Wandlereinrichtung unverrückbar mit dem Betätigungsprofilelement verbunden und an diesem angeordnet. Eine Drehbewegung des Betätigungsprofilelements wird unmittelbar auf die Wandlereinrichtung übertragen.

Mit einem Exzenter können zum Beispiel rotatorische Bewegungen, das heißt Drehbewegungen, nämlich diejenigen Bewegungen des Betätigungsprofilelements, in translatorische Bewegungen, das heißt Längenbewegungen, nämlich diejenigen Bewegungen des Blockierelements der Blockiervorrichtung, umgewandelt werden und umgekehrt.

Ein unrundes Element ist insbesondere ein Element, das eine geometrische Form und einen Querschnitt aufweist, die/der vom Kreis oder einer kreisförmigen Bewegung periodisch abweichen.

Vorzugsweise weist das Exzenterelement oder das unrunde Element eine Steuerfläche auf, welche mit der Blockiervorrichtung, insbesondere mit dem Stößel, vorzugsweise über das Federelement, zusammenwirkt. Bei der Steuerfläche liegt deren Mittelpunkt außerhalb der Wellenachse.

Vorzugsweise weist das Exzenterelement oder das unrunde Element einen Verriegelungspunkt auf, bei dessen Überschreitung sich das Betätigungshebelelement in der Verriegelungsposition befindet. In der Verriegelungsposition wird das Betätigungshebelelement gehalten, ohne dass Gegenkräfte auf dieses wirken. Dieses soll anhand eines Beispiels verdeutlicht werden.

Wenn das Betätigungshebelelement nach unten gedrückt wird, dreht sich auch das damit verbundene Betätigungsprofilelement. Die Wandlereinrichtung in Form eines Exzenterelements, welches fest und positionsfixiert auf dem Betätigungsprofilelement angeordnet ist, indem es von diesem durchsetzt ist, dreht sich, indem dessen Steuerfläche, beispielsweise über ein geeignetes Federelement, auf das Blockierelement, beispielsweise auf einen Stößel, an dessen freiem Ende sich das Blockierelement befindet, drückt, wodurch das Blockierelement senkrecht nach unten auf die Laufrolle gedrückt wird. Wenn das Exzenterelement einen Verriegelungspunkt, insbesondere auf dessen Steuerfläche, überschreitet, welchen man auch als Totpunkt bezeichnen kann oder als denjenigen Punkt, an dem das Exzenterelement überdreht, verbleibt das Exzenterelement und letztlich damit auch das Betätigungshebelelement in dieser Verriegelungsposition. Eine gesonderte Verriegelung ist deshalb nicht mehr erforderlich, da in der Verriegelungsposition keine Gegenkräfte auf das Betätigungshebelelement wirken. Zum Lösen beziehungsweise zum Entriegeln wird mit dem Schuh von unten gegen das Betätigungshebelelement gedrückt und das Betätigungshebelelement dadurch wieder hochgedrückt. Wenn das Exzenterelement den Verriegelungspunkt wieder überschreitet, kehrt das Betätigungshebelelement in seine Entriegelungsposition zurück, beispielsweise unterstützt durch das Federelement.

Die Laufrolleneinrichtung ist insbesondere Bestandsteil eines Fahrwerks für den mobilen Behälter, insbesondere für einen mobilen Abfallsammelbehälter. Als Fahrwerk wird dabei insbesondere die Gesamtheit aller Komponenten verstanden, die eine Verbindung des mobilen Behälters, beispielsweise des Behälterkorpus, mit dem Untergrund, beispielsweise einer Fahrbahn, dem Boden oder dergleichen, herstellen. Im vorliegenden Fall besteht das Fahrwerk aus einer Anzahl von Laufrolleneinrichtungen, die derart bereitgestellt sind, dass sie in der Lage sind, an einem mobilen Behälter, insbesondere am Behälterkorpus, etwa an dessen Behälterbodenelement, vorzugsweise von unten, angeordnet zu werden. Das Fahrwerk weist zwei oder mehr Laufrolleneinrichtungen auf, die individuell und jeweils unabhängig voneinander bereitgestellt sind. Das bedeutetet die Laufrolleneinrichtungen haben keinerlei direkte Verbindung zueinander. Wenigstens eine, vorzugsweise zwei Laufrolleneinrichtungen sind dabei als Laufrolleneinrichtungen gemäß dem ersten Aspekt der Erfindung ausgebildet. Aus diesem Grund wird zur Vermeidung von Wiederholungen an dieser Stelle auch auf die Ausführungen zum ersten Aspekt der Erfindung ebenso wie auf die generellen Ausführungen zur Erfindung vollinhaltlich Bezug genommen und verwiesen.

Gemäß einer bevorzugten Ausführungsform weist der mobile Behälter drei Laufrolleneinrichtungen auf, wobei zwei Laufrolleneinrichtungen eine Feststelleinrichtung aufweisen, während eine, dritte, Laufrolleneinrichtung als Laufrolleneinrichtung ohne Feststelleinrichtung ausgebildet ist. Die Laufrolleneinrichtungen mit Feststelleinrichtung sind bevorzugt als Lenkrolleneinrichtungen ausgebildet. Auch die Laufrolleneinrichtung ohne Feststelleinrichtung ist bevorzugt als eine wie weiter oben bereits beschriebene Lenkrolleneinrichtung ausgebildet, so dass diesbezüglich auf die entsprechenden Ausführungen verwiesen und Bezug genommen wird.

Gemäß einer anderen bevorzugten Ausführungsform weist der mobile Behälter vier Laufrolleneinrichtungen auf, wobei zwei Laufrolleneinrichtungen eine Feststelleinrichtung aufweisen, während zwei Laufrolleneinrichtungen als Laufrolleneinrichtung ohne Feststelleinrichtung ausgebildet sind. Die Laufrolleneinrichtungen mit Feststelleinrichtung sind bevorzugt als Lenkrolleneinrichtungen ausgebildet. Auch die Laufrolleneinrichtungen ohne Feststelleinrichtung sind bevorzugt als wie weiter oben bereits beschriebene Lenkrolleneinrichtungen ausgebildet, so dass diesbezüglich auf die entsprechenden Ausführungen verwiesen und Bezug genommen wird.

Der mobile Behälter, bei dem es sich insbesondere um einen mobilen Abfallsammelbehälter handelt, weist einen Behälterkorpus auf. Dieser besteht aus einem Behälterbodenelement und einer davon nach oben abragenden Behälterseitenwand. Weiterhin weist der Behälter zwei oder mehr Laufrolleneinrichtungen, vorzugsweise drei oder vier Laufrolleneinrichtungen, auf, welche an dem Behälterbodenelement unterhalb des Behälterkorpus angeordnet sind. Vorzugsweise kann/können die als Laufrolleneinrichtung mit Feststelleinrichtung ausgebildete(n) Laufrolleneinrichtung(en) an beziehungsweise unterhalb der Behälterseitenwand, beispielsweise der Frontseite und/oder der Rückseite des Behälterkorpus angeordnet sein. Natürlich ist eine entsprechende Anordnung auch an beziehungsweise unterhalb einer oder beider Seitenwände des Behälterkorpus denkbar, die sich jeweils zwischen der Frontseite und der Rückseite erstrecken, etwa wenn der Behälterkorpus eine rechteckige oder angenähert rechteckige Ausgestaltung hat. Diesbezüglich wird an dieser Stelle auch auf die entsprechenden Ausführungen im Rahmen des ersten Aspekts der Erfindung weiter oben vollinhaltlich Bezug genommen und verwiesen.

Die Laufrolleneinrichtungen mit Feststelleinrichtung sind jeweils eigenständige, voneinander unabhängige Komponenten, die nicht miteinander in Verbindung stehen und die im Sinne einer eingangs geschilderten Individualstop-Lösung jeweils einzeln für sich und unabhängig von den anderen Laufrolleneinrichtungen betätigt werden.

Die Laufrolleneinrichtungen mit Feststelleinrichtung weisen jeweils fest positionierte und in ihrer Anordnungsposition nicht veränderliche Betätigungshebelelemente auf. Erfindungsgemäß ist/sind die als Laufrolleneinrichtung mit Feststelleinrichtung ausgebildete(n) Laufrolleneinrichtung(en) derart an dem Behälterkorpus angeordnet, dass sich das/die an dem zweiten Endbereich des Betätigungsprofilelements befindliche(n) Betätigungshebelelement(e) permanent zwischen zwei, vorzugsweise benachbarten oder einander gegenüberliegenden, Radkonsolen des Behälterkorpus befinden. Eine Radkonsole ist dabei ein Trageelement oder Tragebereich am Behälterkorpus des mobilen Behälters, an dem die Laufrolleneinrichtung an dem Behälterkorpus, vorzugsweise unterhalb eines Behälterbodenelements, angeordnet wird.

In einer bevorzugten Ausführungsform weist die Behälterseitenwand des Behälterkorpus eine oder mehrere Sicken auf. Eine Sicke ist insbesondere eine rinnenförmige oder rillenartige Vertiefung oder Ausbuchtung in der Behälterseitenwand. Die Sicken sind, wenn man von außen auf die Behälterseitenwand blickt, vorzugsweise in Richtung des Behälterinnern ausgerichtet. Die Sicken dienen insbesondere zur Versteifung der Behälterseitenwand und letztlich des gesamten Behälterkorpus gegenüber Verformung und Schwingungen. Derartige Sicken können im Lichte der vorliegenden Erfindung beispielsweise auch Prägungen, Nuten und dergleichen sein. In einer bevorzugten Ausführungsform sind sowohl an der Frontseite als auch an der Rückseite der Behälterseitenwand jeweils zwei solcher Sicken vorgesehen. Die Sicken erstrecken sich entlang der Höhenausdehnung der Behälterseitenwand, vorzugsweise aus Richtung des oberen Rands der Behälterseitenwand in Richtung des Behälterbodenelements. Sie müssen sich jedoch nicht über die gesamte Höhe der Behälterseitenwand erstrecken. Beispielsweise können die Sicken im unteren Drittel oder in der unteren Hälfte der Behälterseitenwand, bezogen auf das Behälterbodenelement, ausgebildet sein. Die Erfindung ist diesbezüglich nicht auf bestimmte Verläufe beschränkt.

Am unteren Ende, das heißt im Bereich des Behälterbodenelements, sind die Sicken vorzugsweise offen. Dieses offene Ende wird als Sickenauslauf bezeichnet, ein Bereich, in dem die Sicke endet.

Vorzugsweise sind die als Laufrolleneinrichtung mit Feststelleinrichtung ausgebildeten Laufrolleneinrichtungen derart an dem Behälterkorpus angeordnet, dass sich in jedem Fall die an dem zweiten Endbereich des Betätigungsprofilelements befindlichen Betätigungshebelelemente jeweils im Bereich eines Sickenauslaufs, vorzugsweise innerhalb einer Begrenzung der Fläche des Sickenauslaufs oder nur geringfügig außerhalb davon, befinden. Je nach Ausgestaltung können die Betätigungshebelelemente genau in dem Auslauf liegen, oder darüber, aber auch darunter. Im Bereich des Sickenauslaufs begrenzt dieser Auslauf eine Fläche, die insbesondere auch durch die Wandung der Sicke begrenzt ist Vorzugsweise befinden sich die Betätigungshebelelemente innerhalb der Begrenzung der Fläche des Sickenauslaufs. Da die Sicken, wenn man von außen auf die Behälterseitenwand blickt, vorzugsweise in Form von Vertiefungen ausgebildet sind, die in Richtung des Innern des Behälterkorpus gerichtet sind, treten die Betätigungshebelelemente nicht über die äußere Begrenzung der Behälterseitenwandung hervor. Dadurch ist eine gute Stapelbarkeit der Behälter gewährleistet.

Beispielsweise kann es sich bei einem mobilen Behälter um einen Müll-Großbehälter handeln. Insbesondere hat der Müll-Großbehälter ein Fassungsvolumen von 400 Litern oder mehr, vorzugsweise von bis zu 1.100 Litern oder mehr. Der Müll-Großbehälter weist einen Müllbehälterkorpus auf, der zur Aufnahme des Mülls dient. Der Müllbehälterkorpus kann beispielsweise in der Draufsicht eine rechteckige, topfförmige Kontur aufweisen. Der Müllbehälterkorpus besteht aus einem Behälterbodenelement und einer Behälterseitenwand, die im Falle einer rechteckigen Kontur aus vier aneinandergrenzenden Seitenwandsegmenten besteht. Zur besseren Handhabbarkeit des Müllbehälters können am Behälterbodenelement vier Laufrollen vorgesehen und angeordnet sein. Die Laufrollen sind jeweils Bestandteil einer Laufrolleneinrichtung. Einzelne Laufrolleneinrichtungen, beispielsweise zwei Laufrolleneinrichtungen, können als Laufrolleneinrichtung mit Feststelleinrichtung gemäß der vorliegenden Erfindung ausgebildet sein. Weitere Laufrolleneinrichtungen, beispielsweise zwei weitere Laufrolleneinrichtungen, können als Laufrolleneinrichtungen ohne Feststelleinrichtung ausgebildet sein.

Die offene Oberseite des Müllbehälterkorpus, über die der Müll eingefüllt wird, und die dazu eine Einfüllöffnung aufweist oder als Einfüllöffnung ausgebildet ist, wird mittels einer Deckeleinrichtung verschlossen. Die Deckeleinrichtung ist an dem Müllbehälterkorpus angelenkt, beispielsweise schwenkbeweglich mittels einer geeigneten Scharniereinrichtung. Vorzugsweise handelt es sich dabei um eine lösbare Verbindung. Der Deckel ist beispielsweise als Flachdeckel, insbesondere als Klappdeckel ausgebildet, der insbesondere über Scharniere, an einer der oberen Kanten des Müllbehälterkorpus, insbesondere an der oberen Hinterkante, angelenkt ist. Derartige Müllbehälter bestehen in der Regel aus robusten Materialien, wie beispielsweise Metall oder harten Kunststoffen.

Die Erfindung wird nun anhand von Ausführungsbeispielen unter Bezugnahme auf die beiliegenden Zeichnungen näher erläutert. Es zeigen
- Figur 1: einen mobilen Behälter gemäß der vorliegenden Erfindung;
- Figuren 2 und 3: eine erste Laufrolleneinrichtung gemäß der vorliegenden Erfindung;
- Figuren 4 und 5: eine zweite Laufrolleneinrichtung gemäß der vorliegenden Erfindung;
- Figur 6: eine Ansicht von unten auf eine am Behälterkorpus des mobilen Behälters angeordnete Laufrolleneinrichtung gemäß der vorliegenden Erfindung;
- Figur 7: die Ansicht eines Teilausschnitts eines Behälterkorpus, an dem Laufrolleneinrichtungen gemäß der Erfindung angeordnet sind; und
- Figuren 8 bis 10: den Aktivierungsverlauf einer Laufrolleneinrichtung gemäß der vorliegenden Erfindung.

Alle Figuren stehen im Zusammenhang mit einem mobilen Behälter 10, der als Abfallsammelbehälter in Form eines Müll-Großbehälters ausgebildet ist, der ein Füllvolumen von 400 Litern oder mehr, insbesondere von bis zu 1.100 Litern oder mehr aufweist.

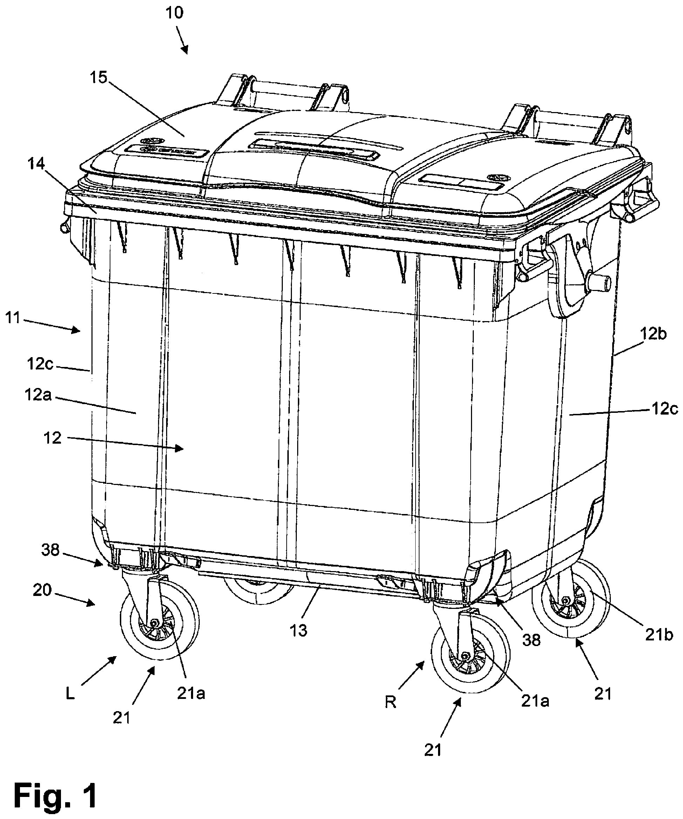

In den Figur 1 ist zunächst der grundsätzliche Aufbau des mobilen Behälters 10 gezeigt.

Der mobile Behälter 10 besteht zunächst aus einem Behälterkorpus 11, der zur Aufnahme von Müll oder Wertstoffen dient. Der Behälterkorpus 11 weist in der Draufsicht eine rechteckige, topfförmige Kontur auf. Der Behälterkorpus 11 besteht aus einem Behälterbodenelement 13 und einer Behälterseitenwand 12. Die Behälterseitenwand 12 verfügt über eine Frontseite 12a sowie über eine Rückseite 12b sowie zwei sich dazwischen erstreckende Seitenwandsegmente 12c. Die offene Oberseite des Behälterkorpus 11, die durch einen oberen Rand beziehungsweise eine obere Kante 14 begrenzt wird und über die der Müll eingefüllt wird, wird mittels einer Deckeleinrichtung 15 verschlossen. Dazu ist die Deckeleinrichtung 15, bei der es sich beispielsweise um einen Flachdeckel, insbesondere einen Klappdeckel, handelt, über eine Scharniereinrichtung an dem Behälterkorpus 11 angelenkt. Zur Befüllung und Entleerung des Behälterkorpus 11 wird die Deckeleinrichtung 15 aufgeklappt.

Zur besseren Handhabbarkeit des mobilen Behälters 10 weist dieser ein Fahrwerk 20 auf, welches aus vier Laufrolleneinrichtungen 21 besteht. Jeweils zwei Laufrolleneinrichtungen 21 sind als erfindungsgemäße Laufrolleneinrichtungen 21a mit Feststelleinrichtung ausgebildet, während zwei weitere Laufrolleneinrichtungen 21 als Laufrolleneinrichtungen 21b ohne Feststelleinrichtung ausgebildet sind. Die Laufrolleneinrichtungen 21 sind jeweils auf der Unterseite des Behälterbodenelements 13 im Bereich entsprechender Radkonsolen 38 angeordnet. Dabei sind die Laufrolleinrichtungen 21, 21a mit Feststelleinrichtung im Bereich der Frontseite 12a der Behälterseitenwand 12 angeordnet, während die Laufrolleneinrichtungen 21, 21b ohne Feststelleinrichtung im Bereich der Rückseite 12b der Behälterseitenwand 12 angeordnet sind.

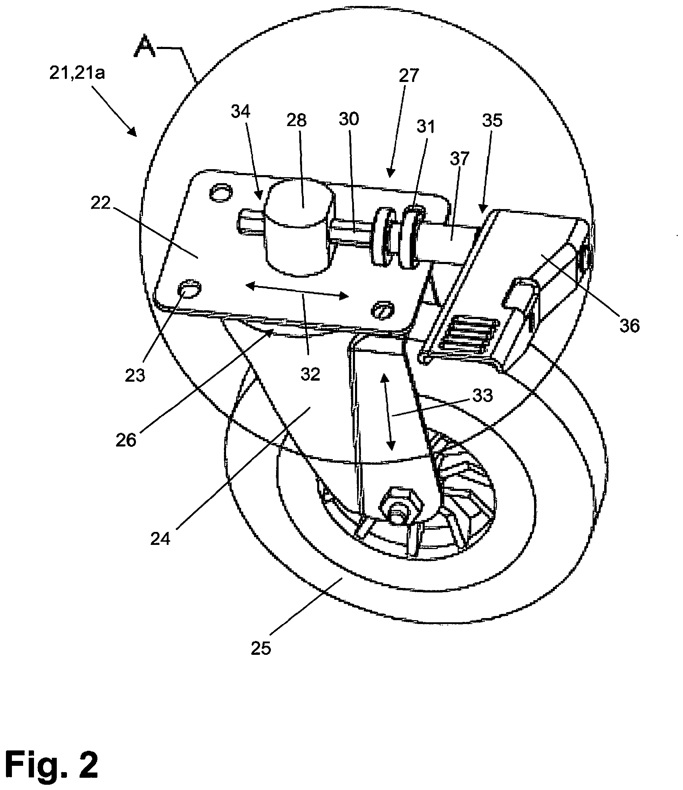

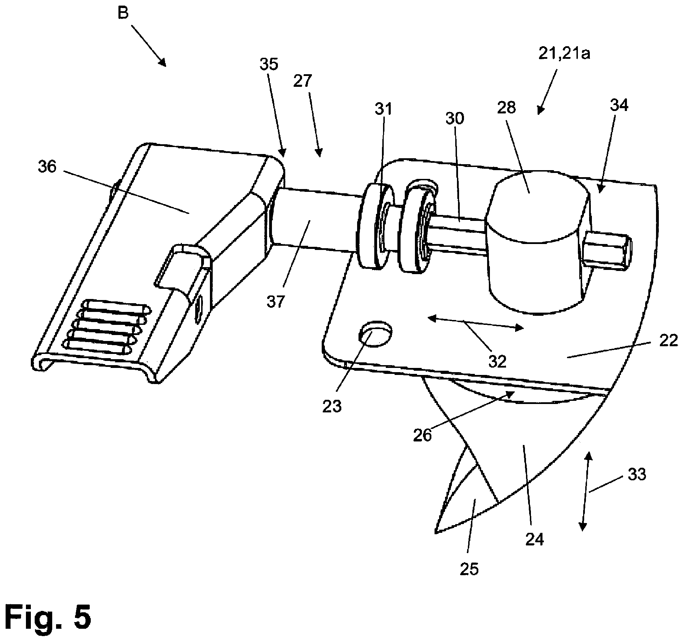

Die erfindungsgemäßen Laufrolleinrichtungen 21, 21a mit Feststelleinrichtung werden nun anhand der Figuren 2 bis 6 näher erläutert. Die einzelnen Laufrolleneinrichtungen 21, 21a sind dabei von den Konstruktionsmerkmalen her identisch aufgebaut, so dass der generelle Aufbau nur einmal beschrieben wird.

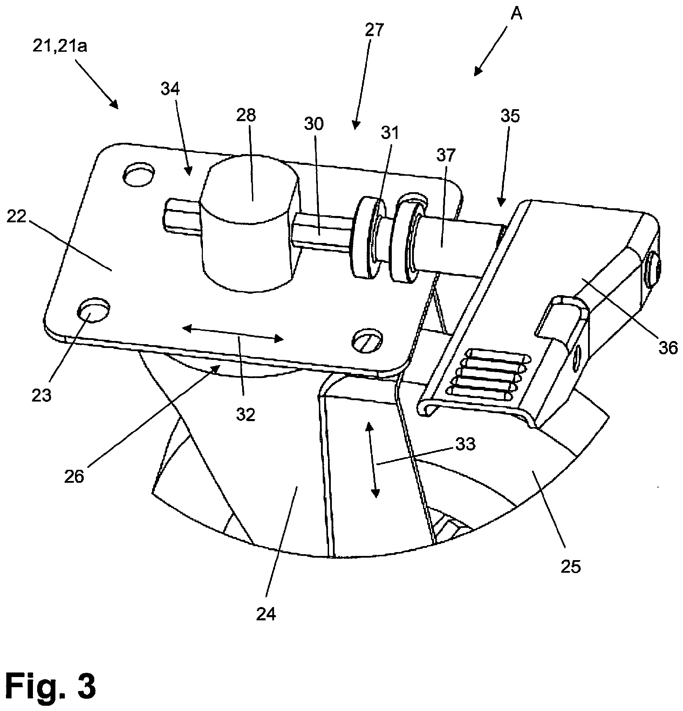

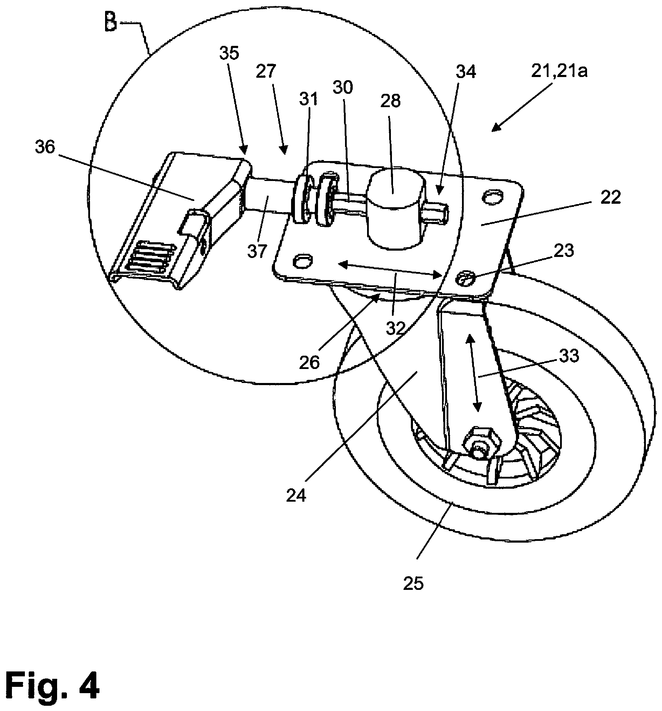

In den Figuren 2 und 3 ist eine Laufrolleneinrichtung 21, 21a mit Feststelleinrichtung dargestellt, die auf der linken Seite L des Behälterkorpus 11 angeordnet ist, während in den Figuren 4 bis 6 eine Laufrolleneinrichtung 21, 21a mit Feststelleinrichtung dargestellt ist, die auf der rechten Seite R des Behälterkorpus 11 angeordnet ist.

Sämtliche Laufrolleneinrichtungen 21, 21a, 21b sind als Lenkrolleneinrichtungen ausgebildet.

Die Laufrolleneinrichtungen 21, 21a mit Feststelleinrichtung sind jeweils eigenständige, voneinander unabhängige Komponenten, die nicht miteinander in Verbindung stehen und die im Sinne einer eingangs geschilderten Individualstop-Lösung jeweils einzeln für sich und unabhängig von den anderen Laufrolleneinrichtungen betätigt werden.

Die Laufrolleneinrichtungen 21, 21a mit Feststelleinrichtung weisen jeweils fest positionierte und in ihrer Anordnungsposition nicht veränderliche Betätigungshebelelemente 36 auf. Die Laufrolleneinrichtung 21, 21a mit Feststelleinrichtung sind dabei derart an dem Behälterkorpus 11 angeordnet, dass sich die an dem zweiten Endbereich des Betätigungsprofilelements 30 befindlichen Betätigungshebelelemente 36 permanent zwischen benachbarten einander gegenüberliegenden Radkonsolen 38 des Behälterkorpus 11 befinden.

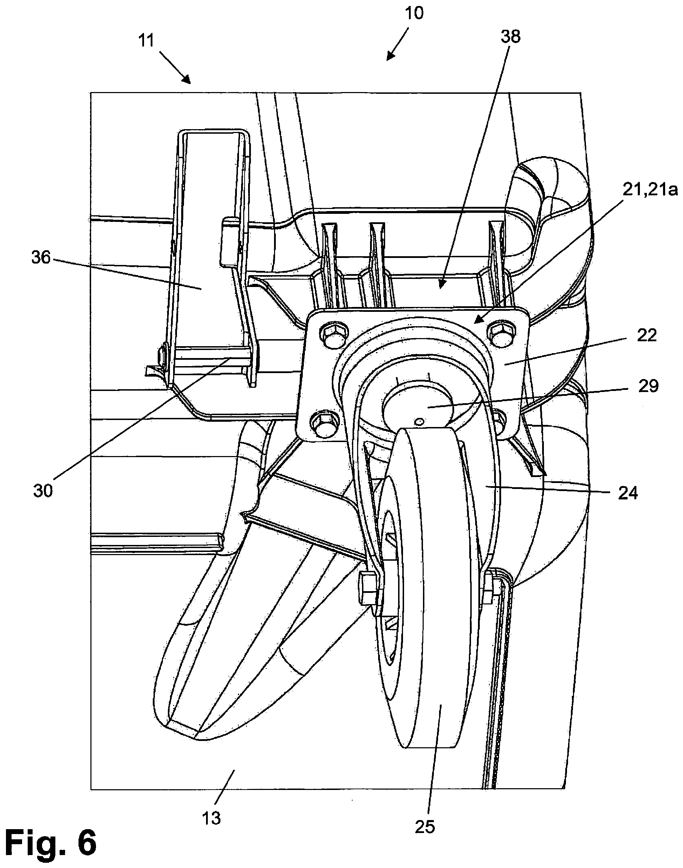

Die Laufrolleneinrichtungen 21, 21a mit Feststelleinrichtung bestehen zunächst aus einer Laufrollengabel 24, in der eine Laufrolle 25 drehbar befestigt ist. Die Laufrollengabel 24 ist über ein lediglich angedeutetes Drehlagerelement 26 derart an einer Befestigungseinrichtung 22 angeordnet, dass die Laufrolle 25 um 360 Grad um eine Drehachse, die sich in einer vertikalen Richtung 33 erstreckt, gedreht werden kann. Im Ausführungsbeispiel ist die Befestigungseinrichtung 22 als Befestigungsplatte ausgebildet. Die Befestigungseinrichtung 22 wiederum ist an dem Behälterbodenelement 13, beispielsweise im Bereich einer Radkonsole 38 (siehe insbesondere Figur 6) angeordnet, beispielsweise mittels einer Schraubverbindung. Dazu weist die Befestigungseinrichtung 22 geeignete Befestigungsbohrungen 23 auf, durch die korrespondierende Schrauben (nicht dargestellt) hindurchgeführt werden.

Die Rollbewegung der Laufrolle 25 und gegebenenfalls die Ausrichtung der Laufrolle 25, das heißt die Stellung der Laufrollengabel 24, kann durch eine geeignete Feststelleinrichtung 27 blockiert werden. Dazu weist die Feststelleinrichtung 27 eine Reihe von Komponenten auf. Zunächst verfügt die Feststelleinrichtung 27 über eine Blockiervorrichtung 28, die lediglich ganz schematisch in den Figuren dargestellt ist. In der Blockiervorrichtung 28 ist in vertikaler Richtung 33 ein Stößel (nicht dargestellt) gleitend gelagert, an dessen freien Ende sich ein Blockierelement 29 befindet, welches in Figur 6 dargestellt ist. Das Blockierelement 29 wird über den Stößel der Blockiervorrichtung 28 in vertikaler Richtung 33 nach unten bewegt, bis es von oben auf die Laufrolle 25 drückt und deren Rollbewegung blockiert.

Betätigt wird die Blockiervorrichtung 28, und insbesondere das Blockierelement 29 über ein als Sechskant-Profil ausgebildetes längliches Betätigungsprofilelement 30. Das Betätigungsprofilelement 30 ist über ein Lagerelement 31 entweder an der Befestigungsplatte 22, oder an der Unterseite des Behälterbodenelements 13 des Behälterkorpus 11 abgestützt. In einem ersten Endbereich 34 ist das Betätigungsprofilelement 30 mit einem Betätigungshebelelement 36 verbunden, bei dem es sich beispielsweise um ein Fußpedal handelt. In seinem zweiten Endbereich 35 ist das Betätigungsprofilelement 30 mit der Blockiervorrichtung 28 verbunden. Beispielsweise kann das Betätigungsprofilelement 30 dort mit einer Wandlereinrichtung (nicht dargestellt) verbunden sein, die eine Drehbewegung des Betätigungsprofilelements 30 in eine translatorische Bewegung des Blockierelements 29 umwandelt. Dazu kann die Wandlereinrichtung beispielsweise als eine Exzentreinrichtung (nicht dargestellt) ausgebildet sein, wobei die Exzentereinrichtung vorzugsweise von dem Betätigungsprofilelement 30 durchsetzt ist und positionsfixiert daran angeordnet ist. Zwischen dem zweiten Endbereich 35 und dem Lagerelement 31 kann sich bei Bedarf eine Distanzhülse 37 befinden. Das Betätigungsprofilelement 30 verläuft in horizontaler Richtung 32 und erstreckt sich über die Befestigungseinrichtung 22 in Form der Befestigungsplatte hinaus. Das Betätigungsprofilelement 30 ist von der drehbaren Laufrollengabel 24 entkoppelt. Zwischen dem Stößel und der Exzentereinrichtung kann sich eine ebenfalls nicht dargestellte Federeinrichtung befinden.

Die Wandlereinrichtung ist bevorzugt derart bereitgestellt, dass das Betätigungshebelelement 36 in einer Verriegelungsposition keine Gegenkräfte erfährt. Nach Betätigung des Betätigungshebelelements 36 und dadurch des Betätigungsprofileelements 30, und hierüber des Blockierelements 29 der Blockiervorrichtung 28, verharrt die Laufrolle 25 selbsttätig im gebremsten Zustand, es ist kein zusätzliches Verriegelungssystem notwendig.

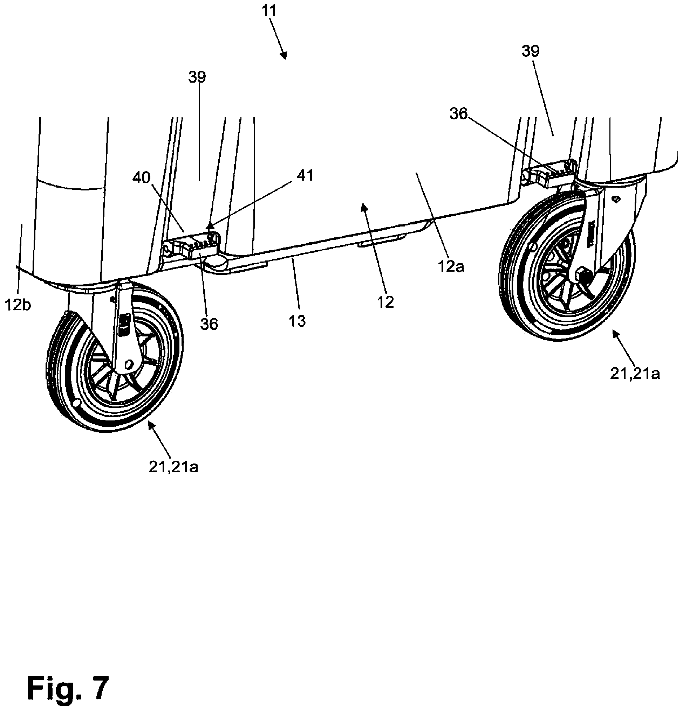

In Figur 7 ist eine Ausführungsform dargestellt, die einen Ausschnitt aus dem unteren Bereich Behälterkorpus 11 im Bereich des Behälterbodenelements 13 zeigt, und bei der die Behälterseitenwand 12 eine Anzahl von Sicken 39 aufweist. Am unteren Ende, das heißt im Bereich des Behälterbodenelements 13, sind die Sicken 39 offen. Dieses offene Ende wird als Sickenauslauf 40 bezeichnet. Die als Laufrolleneinrichtung mit Feststelleinrichtung ausgebildeten Laufrolleneinrichtungen 21a sind derart an dem Behälterkorpus 11 angeordnet, dass sich die an dem zweiten Endbereich (35) - siehe Figuren 2 bis 6 - des Betätigungsprofilelements 30 befindlichen Betätigungshebelelemente 36 jeweils im Bereich eines Sickenauslaufs 40, vorzugsweise innerhalb einer Begrenzung der Fläche 41 des Sickenauslaufs 40 oder nur geringfügig außerhalb davon, befinden.

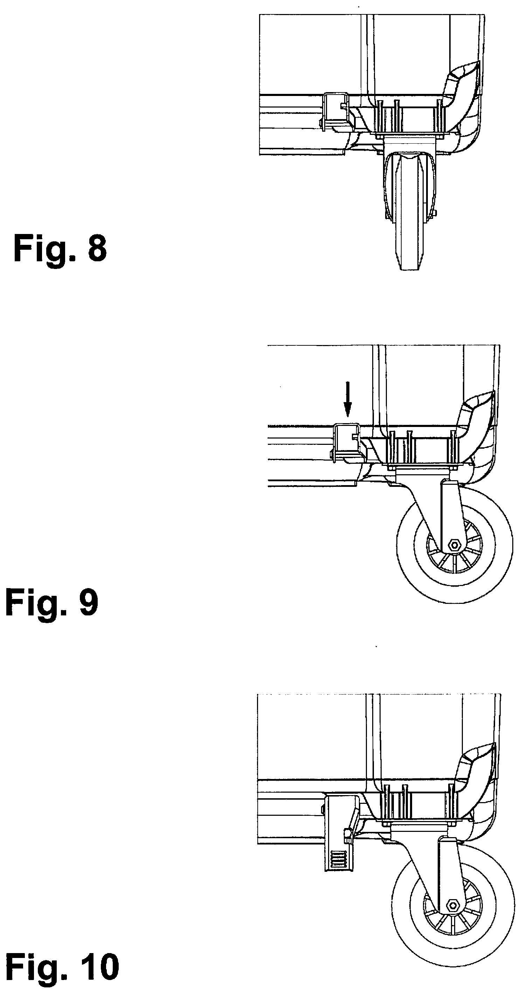

Die Funktionsweise der Laufrolleneinrichtung 21, 21a mit Feststelleinrichtung wird nun auch anhand der Figuren 8 bis 10 erläutert.

Zunächst befindet sich die Feststelleinrichtung in einer ersten Position, die auch als Entriegelungsposition bezeichnet wird. In diesem Zustand, der in Figur 8 dargestellt ist, kann sich die Laufrolle frei bewegen, so dass der mobile Behälter problemlos in jede gewünschte Richtung verschoben werden kann.

Wenn das Betätigungshebelelement nach unten gedrückt wird, was in Figur 9 dargestellt ist, dreht sich auch das damit verbundene Betätigungsprofilelement. Die Wandlereinrichtung in Form eines Exzenterelements, welches fest und positionsfixiert auf dem Betätigungsprofilelement angeordnet ist, indem es von diesem durchsetzt ist, dreht sich, indem dessen Steuerfläche auf das Blockierelement, beispielsweise auf einen Stößel, an dessen freiem Ende sich das Blockierelement befindet, drückt, wodurch das Blockierelement senkrecht nach unten gedrückt wird.

Wenn das Exzenterelement einen Verriegelungspunkt, insbesondere auf dessen Steuerfläche, überschreitet, verbleibt das Exzenterelement und letztlich damit auch das Betätigungshebelelement in dieser Verriegelungsposition. Dieser Zustand ist in Figur 10 gezeigt. Eine gesonderte Verriegelung ist deshalb nicht mehr erforderlich, da in der Verriegelungsposition keine Gegenkräfte auf das Betätigungshebelelement wirken. Zum Lösen beziehungsweise zum Entriegeln wird mit dem Schuh von unten gegen das Betätigungshebelelement gedrückt und das Betätigungshebelelement dadurch wieder hochgedrückt. Wenn das Exzenterelement den Verriegelungspunkt wieder überschreitet, kehrt das Betätigungshebelelement in seine Entriegelungsposition zurück, beispielsweise unterstützt durch ein Federelement.

### Bezugszeichenliste

- 10: Mobiler Behälter (Abfallsammelbehälter)
- 11: Behälterkorpus
- 12: Behälterseitenwand
- 12a: Frontseite
- 12b: Rückseite
- 12c: Seitenwandsegment
- 13: Behälterbodenelement
- 14: Obere Kante des Behälterkorpus
- 15: Deckeleinrichtung
- 20: Fahrwerk
- 21: Laufrolleneinrichtung (Lenkrolleneinrichtung)
- 21a: Laufrolleneinrichtung mit Feststelleinrichtung
- 21b: Laufrolleneinrichtung ohne Feststelleinrichtung
- 22: Befestigungseinrichtung (Befestigungsplatte)
- 23: Befestigungsbohrung
- 24: Laufrollengabel
- 25: Laufrolle
- 26: Drehlagerelement
- 27: Feststelleinrichtung
- 28: Blockiervorrichtung
- 29: Blockierelement
- 30: Betätigungsprofilelement
- 31: Lagerelement
- 32: Horizontale Richtung
- 33: Vertikale Richtung
- 34: Erster Endbereich des Betätigungsprofilelements
- 35: Zweiter Endbereich des Betätigungsprofilelements
- 36: Betätigungshebelelement (Fußpedal)
- 37: Distanzhülse
- 38: Radkonsole
- 39: Sicke
- 40: Sickenauslauf
- 41: Fläche des Sickenauslaufs
- L: Linke Seite des Behälterkorpus
- R: Rechte Seite des Behälterkorpus

## Patentansprüche

1. Mobiler Behälter (10), insbesondere mobiler Abfallsammelbehälter, mit einem Behälterkorpus (11), der ein Behälterbodenelement (13) und eine Behälterseitenwand (12) aufweist, und mit zwei oder mehr Laufrolleneinrichtungen (21, 21a, 21b), wobei wenigstens eine, vorzugsweise zwei Laufrolleneinrichtung(en) als Laufrolleneinrichtung (21, 21a) mit Feststelleinrichtung ausgebildet sind, aufweisend (21, 21a) eine Laufrollengabel (24), an welcher eine Laufrolle (25) angeordnet ist, und eine Befestigungseinrichtung (22), die mit der Laufrollengabel (24) verbunden ist oder die als ein Teil der Laufrollengabel (24) ausgebildet ist, und die derart bereitgestellt ist, dass sie in der Lage ist, an einem mobilen Behälter (10) befestigt zu werden, wobei die Laufrolleneinrichtung (21, 21a) eine Feststelleinrichtung (27) zum Blockieren der Rollbewegung der Laufrolle (25) aufweist, mit einer Blockiervorrichtung (28), aufweisend ein bewegliches Blockierelement (29) und eine Wandlereinrichtung zum Umwandeln einer Drehbewegung in eine translatorische Bewegung, ein der Blockiervorrichtung (28) individuell zugeordnetes längliches Betätigungsprofilelement (30), welches horizontal ausgerichtet und drehbar an der Laufrolleneinrichtung (21, 21a), insbesondere an der Blockiervorrichtung (28) und/oder der Befestigungseinrichtung (22), gelagert ist, welches sich in seiner Längserstreckung über die Befestigungseinrichtung (22) hinaus erstreckt, welches in einem ersten Endbereich (34) mit der Wandlereinrichtung zusammenwirkt, und welches in einem zweiten Endbereich (35), der dem ersten Endbereich (34) gegenüberliegt, ein Betätigungshebelelement (36) aufweist, wobei das Betätigungshebelelement (36) über das Betätigungsprofilelement (30) an der Laufrolleneinrichtung (21, 21a), insbesondere an der Blockiervorrichtung (28), zwischen einer ersten Position, die eine Entriegelungsposition ist, und einer dazu verschiedenen zweiten Position, die eine Verriegelungsposition ist, drehbar gelagert ist, wobei die Wandlereinrichtung zum Umwandeln der Drehbewegung des Betätigungsprofilelements (30) in eine translatorische Bewegung des Blockierelements (29) ausgebildet ist, **dadurch gekennzeichnet, dass** die Laufrolleneinrichtungen (21, 21a, 21b) individuell und voneinander unabhängig betätigt werden und an dem Behälterbodenelement (13) unterhalb des Behälterkorpus (11) angeordnet sind, dass die als Laufrolleneinrichtung (21, 21a) mit Feststelleinrichtung ausgebildete(n) Laufrolleneinrichtung(en) derart an dem Behälterkorpus (11) angeordnet sind, dass sich das/die an dem zweiten Endbereich (35) des Betätigungsprofilelements (30) befindliche(n) Betätigungshebelelement(e) (36) permanent zwischen zwei Radkonsolen (38) des Behälterkorpus (11) befindet/befinden, die jeweils ein Tragelement oder einen Tragbereich an dem Behälterkorpus (11) bilden, an denen die Laufrolleneinrichtung(en) (21, 21a, 21b) befestigt werden, dass das Betätigungshebelelement (36) als Fußpedal ausgebildet ist, und dass die Wandlereinrichtung derart bereitgestellt ist, dass das Betätigungshebelelement (36) in der zweiten Verriegelungsposition keine Gegenkräfte erfährt.

2. Mobiler Behälter nach Anspruch 1, **dadurch gekennzeichnet, dass** die Laufrolleneinrichtung (21, 21a) als Lenkrolleneinrichtung ausgebildet ist.

3. Mobiler Behälter nach Anspruch 1 oder 2, **dadurch gekennzeichnet, dass** die Wandlereinrichtung derart bereitgestellt ist, dass das Betätigungshebelelement (36) in der ersten Entriegelungsposition keine Gegenkräfte erfährt.

4. Mobiler Behälter nach einem der Ansprüche 1 bis 3, **dadurch gekennzeichnet, dass** das Betätigungshebelelement (36) eine maximale Länge von kleiner oder gleich 15 cm, bevorzugt kleiner oder gleich 10 cm, besonders bevorzugt von kleiner oder gleich 7.5 cm aufweist, und/oder dass das Betätigungshebelelement (36) eine maximale Breite von kleiner oder gleich 7 cm, bevorzugt kleiner oder gleich 5 cm aufweist.

5. Mobiler Behälter nach einem der Ansprüche 1 bis 4, **dadurch gekennzeichnet, dass** das Betätigungshebelelement (36) in der ersten Entriegelungsposition in einem definierten Winkel mit einem aus der Horizontalen schräg nach unten abragenden Verlauf an dem Betätigungsprofilelement (30) angeordnet oder ausgebildet ist, und dass der Winkel mehr als 20 Grad beträgt, bevorzugt in einem Bereich zwischen 30 und 45 Grad liegt, und/oder dass das Betätigungshebelelement (36) in der zweiten Verriegelungsposition in einem definierten Winkel mit einem aus der Horizontalen schräg nach unten abragenden Verlauf an dem Betätigungsprofilelement (30) angeordnet oder ausgebildet ist, und dass der Winkel mehr als 50 Grad beträgt, bevorzugt in einem Bereich zwischen 60 und 90 Grad liegt.

6. Mobiler Behälter nach einem der Ansprüche 1 bis 5, **dadurch gekennzeichnet, dass** die Länge des Betätigungsprofilelements (30) kleiner 30 cm ist, vorzugsweise kleiner 20 cm ist, bevorzugt kleiner oder gleich 15 cm, bevorzugt kleiner oder gleich 10 cm, ist.

7. Mobiler Behälter nach einem der Ansprüche 1 bis 6, **dadurch gekennzeichnet, dass** das Blockierelement (29) gleitbeweglich an oder in der Blockiervorrichtung (28) angeordnet ist, und dass die Gleitstrecke bevorzugt im Bereich zwischen 5 bis 8 mm liegt, und/oder dass die Blockiervorrichtung (28) einen in der Blockiervorrichtung (28) beweglich geführten Stößel aufweist, und dass das Blockierelement (29) an einem ersten freien Ende des Stößels angeordnet oder ausgebildet ist.

8. Mobiler Behälter nach einem der Ansprüche 1 bis 7, **dadurch gekennzeichnet, dass** die Wandlereinrichtung ein Exzenterelement oder ein unrundes Element aufweist oder als ein solches ausgebildet ist, welches insbesondere von dem Betätigungsprofilelement (30) durchsetzt ist und vorzugsweise positionsfixiert an diesem angeordnet ist.

9. Mobiler Behälter nach Anspruch 8, **dadurch gekennzeichnet, dass** das Exzenterelement oder das unrunde Element eine Steuerfläche aufweist, welche mit der Blockiervorrichtung (28), insbesondere mit dem Stößel, vorzugsweise über das Federelement, zusammenwirkt, und/oder dass das Exzenterelement oder das unrunde Element einen Verriegelungspunkt aufweist, bei dessen Überschreitung sich das Betätigungshebelelement (36) in der Verriegelungsposition befindet.

10. Mobiler Behälter nach einem der Ansprüche 1 bis 9, **dadurch gekennzeichnet, dass** der mobile Behälter (10) drei oder vier Laufrolleneinrichtungen (21, 21a, 21b) aufweist, wobei zwei Laufrolleneinrichtungen (21 21a) gemäß einem der Ansprüche 1 bis 9 ausgebildet sind und eine Feststelleinrichtung (27) aufweisen, und wobei eine oder zwei Laufrolleneinrichtung(en) (21, 21b) ohne eine Feststelleinrichtung ausgebildet ist/sind.

11. Mobiler Behälter nach einem der Ansprüche 1 bis 10, **dadurch gekennzeichnet, dass** die als Laufrolleneinrichtung (21, 21a) mit Feststelleinrichtung ausgebildete(n) Laufrolleneinrichtung(en) im Bereich der Frontseite (12a) und/oder der Rückseite (12b) der Behälterseitenwand (12) des Behälterkorpus (11) angeordnet ist/sind.

12. Mobiler Behälter nach einem der Ansprüche 1 bis 11, **dadurch gekennzeichnet, dass** die Behälterseitenwand (12) eine oder mehrere Sicke(n) (39) aufweist, deren Sickenauslauf (40) im Bereich des Behälterbodenelements (13) ausgebildet ist, und dass die als Laufrolleneinrichtung (21, 21a) mit Feststelleinrichtung ausgebildete(n) Laufrolleneinrichtung(en) derart an dem Behälterkorpus (11) angeordnet sind, dass sich das/die an dem zweiten Endbereich (35) des Betätigungsprofilelements (30) befindliche(n) Betätigungshebelelement(e) (36) im Bereich eines Sickenauslaufs (40), vorzugsweise innerhalb einer Begrenzung der Fläche (41) des Sickenauslaufs (40) befindet/befinden.

## Claims

1. Mobile container (10), in particular a mobile waste collection container, with a container body (11) that comprises a container bottom element (13) and a container side wall (12), and with two or more roller devices (21, 21a, 21b), wherein at least one, preferably two roller devices are designed as roller devices (21, 21a) with locking devices, comprising (21, 21a) a roller fork (24) on which a roller (25) is arranged, and a fastening device (22) which is connected to the roller fork (24) or which is designed as part of the roller fork (24) and which is provided in such a way that it can be fastened to a mobile container (10), wherein the roller device (21, 21a) comprises a locking device (27) for blocking the rolling movement of the roller (25), with a blocking device (28) comprising a movable blocking element (29) and a converter device for converting a rotary movement into a translational movement, an elongated actuating profile element (30) individually assigned to the blocking mechanism (28) (30) which is aligned horizontally and mounted pivotably on the roller device (21, 21a), in particular on the blocking device (28) and/or the fastening device (22), which extends in its longitudinal direction beyond the fastening device (22), which cooperates with the converter device in a first end region (34) and which comprises an actuating lever element (36) in a second end region (35) opposite the first end region (34), wherein the actuating lever element (36) is pivotably mounted via the actuating profile element (30) on the roller device (21, 21a), in particular on the blocking device (28), between a first position, which is an unlocking position, and a second position, which is different therefrom and is a locking position, wherein the converter device is designed to convert the rotary movement of the actuating profile element (30) into a translational movement of the blocking element (29), **characterised in that** the roller devices (21, 21a, 21b) are actuated individually and independently of one another and are arranged on the container bottom element (13) below the container body (11), **in that** the roller device(s) (21, 21a) with locking device are arranged on the container body (11) in such a way that the actuating lever element(s)(e) (36) located at the second end region (35) of the actuating profile element (30) are permanently located between two wheel brackets (38) of the container body (11), which each form a support element or a support region on the container body (11) to which the roller device(s) (21, 21a, 21b) is/are attached, that the actuating lever element (36) is designed as a foot pedal, and that the converter device is provided in such a way that the actuating lever element (36) does not experience any counterforces in the second locking position.

2. Mobile container according to claim 1, **characterised in that** the roller device (21, 21a) is designed as a steering roller device.

3. Mobile container according to claim 1 or 2, **characterised in that** the converter device is provided in such a way that the actuating lever element (36) does not experience any counterforces in the first unlocking position.

4. Mobile container according to any one of claims 1 to 3, **characterised in that** the actuating lever element (36) has a maximum length of less than or equal to 15 cm, preferably less than or equal to 10 cm, particularly preferably less than or equal to 7.5 cm, and/or that the actuating lever element (36) has a maximum width of less than or equal to 7 cm, preferably less than or equal to 5 cm.

5. Mobile container according to any one of claims 1 to 4, **characterised in that** the actuating lever element (36) is arranged or formed in the first unlocking position on the actuating profile element (30 at a defined angle with a downwardly sloping course from the horizontal), and **in that** the angle is greater than 20 degrees, preferably in a range between 30 and 45 degrees, and/or that the actuating lever element (36) is arranged or formed in the second locking position at a defined angle with a downwardly sloping course from the horizontal on the actuating profile element (30), and that the angle is greater than 50 degrees, preferably in a range between 60 and 90 degrees.

6. Mobile container according to any one of claims 1 to 5, **characterised in that** the length of the actuating profile element (30) is less than 30 cm, preferably less than 20 cm, preferably less than or equal to 15 cm, preferably less than or equal to 10 cm.

7. Mobile container according to any one of claims 1 to 6, **characterised in that** the blocking element (29) is arranged so as to be slidable on or in the blocking device (28), and **in that** the sliding distance is preferably in the range between 5 and 8 mm, and/or that the blocking device (28) has a plunger guided movably in the blocking device (28), and that the blocking element (29) is arranged or formed at a first free end of the plunger.

8. Mobile container according to any one of claims 1 to 7, **characterised in that** the converter device comprises an eccentric element or a non-circular element or is designed as such, which is in particular penetrated by the actuating profile element (30) and is preferably arranged in a position-fixed manner on this.

9. Mobile container according to claim 8, **characterised in that** the eccentric element or the non-circular element has a control surface which interacts with the blocking device (28), in particular with the plunger, preferably via the spring element, and/or that the eccentric element or the non-circular element has a locking point, beyond which the actuating lever element (36) is in the locking position.

10. Mobile container according to any one of claims 1 to 9, **characterised in that** the mobile container (10) comprises three or four roller devices (21, 21a, 21b), wherein two roller devices (21, 21a) are designed in accordance with any one of claims 1 to 9 and have a locking device (27), and wherein one or two roller devices (21, 21b) are designed without a locking device.

11. Mobile container according to any one of claims 1 to 10, **characterised in that** the roller device(s) designed as roller devices (21, 21a) with locking devices are arranged in the area of the front side (12a) and/or the rear side (12b) of the container side wall (12) of the container body (11).

12. Mobile container according to any one of claims 1 to 11, **characterised in that** the container side wall (12) comprises one or more beads (39), the bead outlet (40) of which is formed in the area of the container bottom element (13), and **in that** the roller device(s) (21, 21a) with locking device are arranged on the container body (11) in such a way that the actuating lever element(s) (36) located at the second end region (35) of the actuating profile element(s) (30) located at the second end region (35) of the actuating profile element (30) is/are located in the region of a bead outlet (40), preferably within a boundary of the area (41) of the bead outlet (40).

## Revendications

1. Conteneur mobile (10), en particulier conteneur de collecte de déchets mobile, avec un corps de conteneur (11) qui présente un élément de fond de conteneur (13) et une paroi latérale de conteneur (12), et avec deux ensembles de galets de roulement (21, 21a, 21b) ou plus, dans lequel au moins un, de préférence deux ensembles de galets de roulement sont configurés comme ensemble de galets de roulement (21, 21a) avec ensemble de verrouillage, présentant (21, 21a) une fourche de galets de roulement (24), au niveau de laquelle un galet de roulement (25) est agencé, et un ensemble de fixation (22) qui est relié à la fourche de galets de roulement (24) ou qui est configuré comme une partie de la fourche de galets de roulement (24) et qui est prévu de telle manière qu'il soit en mesure d'être fixé à un conteneur mobile (10), dans lequel l'ensemble de galets de roulement (21, 21a) présente un ensemble de verrouillage (27) pour le blocage du mouvement de roulement du galet de roulement (25), avec dispositif de blocage (28) présentant un élément de blocage (29) mobile et un ensemble convertisseur pour la conversion d'un mouvement de rotation en un mouvement de translation, un élément profilé d'actionnement (30) oblong associé individuellement au dispositif de blocage (28) qui est orienté horizontalement et logé de manière rotative au niveau de l'ensemble de galets de roulement (21, 21a), en particulier au niveau du dispositif de blocage (28) et/ou de l'ensemble de fixation (22), qui s'étend dans son étendue longitudinale au-delà de l'ensemble de fixation (22) qui coagit dans une première zone d'extrémité (34) avec l'ensemble convertisseur et qui présente dans une seconde zone d'extrémité (35), qui est opposée à la première zone d'extrémité (34), un élément de levier d'actionnement (36), dans lequel l'élément de levier d'actionnement (36) est logé de manière rotative par le biais de l'élément profilé d'actionnement (30) au niveau de l'ensemble de galets de roulement (21, 21a), en particulier au niveau du dispositif de blocage (28), entre une première position qui est une position de déverrouillage et une seconde position différente qui est une position de verrouillage, dans lequel l'ensemble convertisseur est configuré pour la conversion du mouvement de rotation de l'élément profilé d'actionnement (30) en un mouvement de translation de l'élément de blocage (29), **caractérisé en ce que** les ensembles de galets de roulement (21, 21a, 21b) sont actionnés individuellement et indépendamment les uns des autres et sont agencés au niveau de l'élément de fond de conteneur (13) en dessous du corps de conteneur (11), **en ce que** le/les ensemble(s) de galets de roulement configuré(s) comme ensemble de galets de roulement (21, 21a) avec ensemble de verrouillage sont agencés au niveau du corps de conteneur (11) de telle manière que le/les éléments profilés d'actionnement (36) se trouvant au niveau de la seconde zone d'extrémité (35) de l'élément profilé d'actionnement (30) se trouvent en permanence entre deux consoles de roue (38) du corps de conteneur (11) qui forment respectivement un élément porteur ou une zone porteuse au niveau du corps de conteneur (11), auxquels le/les ensemble(s) de galets de roulement (21, 21a, 21b) sont fixés, **en ce que** l'élément de levier d'actionnement (36) est configuré comme pédale et **en ce que** l'ensemble convertisseur est fourni de telle manière que l'élément de levier d'actionnement (36) ne subisse aucune force antagoniste dans la seconde position de verrouillage.

2. Conteneur mobile selon la revendication 1, **caractérisé en ce que** l'ensemble de galets de roulement (21, 21a) est configuré comme ensemble de galets de roulement directeurs.

3. Conteneur mobile selon la revendication 1 ou 2, **caractérisé en ce que** l'ensemble convertisseur est prévu de telle manière que l'élément de levier d'actionnement (36) ne subisse aucune force antagoniste dans la première position de déverrouillage.

4. Conteneur mobile selon l'une quelconque des revendications 1 à 3, **caractérisé en ce que** l'élément de levier d'actionnement (36) présente une longueur maximale inférieure ou égale à 15 cm, de préférence inférieure ou égale à 10 cm, le plus préférentiellement inférieure ou égale à 7,5 cm et/ou **en ce que** l'élément de levier d'actionnement (36) présente une largeur maximale inférieure ou égale à 7 cm, de préférence inférieure ou égale à 5 cm.

5. Conteneur mobile selon l'une quelconque des revendications 1 à 4, **caractérisé en ce que** l'élément de levier d'actionnement (36) est agencé ou configuré dans la première position de déverrouillage selon un angle défini avec un chemin faisant saillie de l'horizontale en biais vers le bas au niveau de l'élément profilé d'actionnement (30), et **en ce que** l'angle s'élève à plus de 20 degrés, de préférence est compris dans une plage entre 30 et 45 degrés, et/ou **en ce que** l'élément de levier d'actionnement (36) est agencé ou configuré dans la seconde position de verrouillage selon un angle défini avec un chemin faisant saillie de l'horizontale en biais vers le bas au niveau de l'élément profilé d'actionnement (30), et **en ce que** l'angle s'élève à plus de 50 degrés, de préférence est compris dans une plage entre 60 et 90 degrés.

6. Conteneur mobile selon l'une quelconque des revendications 1 à 5, **caractérisé en ce que** la longueur de l'élément profilé d'actionnement (30) est inférieure à 30 cm, de préférence inférieure à 20 cm, de préférence inférieure ou égale à 15 cm, de préférence inférieure ou égale à 10 cm.

7. Conteneur mobile selon l'une quelconque des revendications 1 à 6, **caractérisé en ce que** l'élément de blocage (29) est agencé de manière mobile en glissement au niveau ou dans le dispositif de blocage (28), et **en ce que** la voie de glissement se trouve de préférence dans une plage allant de 5 à 8 mm, et/ou **en ce que** le dispositif de blocage (28) présente un coulisseau guidé de manière mobile dans le dispositif de blocage (28), et **en ce que** l'élément de blocage (29) est agencé ou configuré au niveau d'une première extrémité libre du coulisseau.

8. Conteneur mobile selon l'une quelconque des revendications 1 à 7, **caractérisé en ce que** l'ensemble convertisseur présente un élément à excentrique ou un élément non rond ou est configuré comme tel qui est traversé en particulier par l'élément profilé d'actionnement (30) et est agencé de préférence en position fixe sur celui-ci.

9. Conteneur mobile selon la revendication 8, **caractérisé en ce que** l'élément à excentrique ou l'élément non rond présente une surface de commande qui coagit avec le dispositif de blocage (28), en particulier avec le coulisseau, de préférence par le biais de l'élément de ressort et/ou **en ce que** l'élément à excentrique ou l'élément non rond présente un point de verrouillage, lors du dépassement duquel l'élément de levier d'actionnement (36) se trouve dans la position de verrouillage.

10. Conteneur mobile selon l'une quelconque des revendications 1 à 9, **caractérisé en ce que** le conteneur mobile (10) présente trois ou quatre ensembles de galets de roulement (21, 21a, 21b), dans lequel deux ensembles de galets de roulement (21, 21a) sont configurés selon l'une quelconque des revendications 1 à 9 et présentent un ensemble de verrouillage (27) et dans lequel un ou deux ensembles de galets de roulement (21, 21b) est/sont configuré(s) sans ensemble de verrouillage.

11. Conteneur mobile selon l'une quelconque des revendications 1 à 10, **caractérisé en ce que** le/les ensembles de galets de roulement (21, 21a) configuré(s) comme ensemble de galets de roulement (21, 21a) avec ensemble de verrouillage est/sont agencés dans la zone du côté avant (12a) et/ou du côté arrière (12b) de la paroi latérale de conteneur (12) du corps de conteneur (11).

12. Conteneur mobile selon l'une quelconque des revendications 1 à 11, **caractérisé en ce que** la paroi latérale de conteneur (12) présente une ou plusieurs moulure(s) (39) dont la sortie de moulure (40) est configurée dans la zone de l'élément de fond de conteneur (13) et **en ce que** le/les ensemble(s) de galets de roulement configuré(s) comme ensemble de galets de roulement (21, 21a) avec ensemble de verrouillage sont agencés au niveau du corps de conteneur (11) de telle manière que le/les éléments de levier d'actionnement (36) se trouvant au niveau de la seconde zone d'extrémité (35) de l'élément profilé d'actionnement (30) se trouve/trouvent dans la zone d'une sortie de moulure (40), de préférence dans une limitation de la surface (41) de la sortie de moulure (40).
